# EUROPEAN PATENT APPLICATION

(11) **EP 4 803 778 A1**
(43) Date of publication of application: **09.09.2026**
(21) Application number: 24885381.4
(22) Date of filing: 08.10.2024
(51) Int. Cl.: F16H 25/22, B23Q 5/22, B23Q 5/40, B23Q 11/14, B23Q 17/22, F16C 19/06, F16C 19/52, F16C 29/06, F16C 41/00, G01K 1/14

(54) **MECHANICAL DEVICE AND TEMPERATURE MANAGEMENT SYSTEM**

(30) Priority: 02.11.2023 JP 2023188506; 02.11.2023 JP 2023188747; 02.11.2023 JP 2023188748; 16.04.2024 JP 2024065957
(71) Applicant: NSK Ltd., Tokyo 141-8560 (JP)
(72) Inventor: KUWAHARA, Masaki, Fujisawa-shi, Kanagawa 251-8501 (JP); KUBOKAWA, Minoru, Fujisawa-shi, Kanagawa 251-8501 (JP); ENDOU, Shigeru, Fujisawa-shi, Kanagawa 251-8501 (JP); MARUYAMA, Daisuke, Fujisawa-shi, Kanagawa 251-8501 (JP); TANAKA, Sadayuki, Fujisawa-shi, Kanagawa 251-8501 (JP); KONDOU, Masateru, Fujisawa-shi, Kanagawa 251-8501 (JP); ABE, Daisuke, Fujisawa-shi, Kanagawa 251-8501 (JP)
(74) Representative: SSM Sandmair
(86) International application number: PCT/JP2024/035906
(87) International publication number: WO 2025/094606

(57) **Abstract**

A mechanical device 20 includes: a shaft member 31; a bearing 42 that rotatably supports the shaft member 31 so as to be; and an RFID tag 33a that includes a temperature sensor 33b configured to detect a temperature of the shaft member 31 and transmits the temperature detected by the temperature sensor 33b to a reader/writer 3.

## Description

### Field

The present disclosure relates to a mechanical device and a temperature management system.

### Background

Patent Literature 1 discloses a bearing unit for a conveyance device as an example of a mechanical device. The mechanical device of Patent Literature 1 includes a housing, a bearing disposed in the housing, a sensor that detects a status of the bearing, and a transmitter that wirelessly transmits information detected by the sensor.

The bearing, the sensor, and the transmitter are disposed in the housing. The sensor is a temperature sensor, for example, and detects the temperature of the bearing. The change in state of the bearing may bring about an increase in the temperature of the bearing, leading to occurrence of an abnormality in the bearing in some cases. The mechanical device of Patent Literature 1 can contribute to the detection of an abnormality in the bearing based on the temperature detected by the temperature sensor.

### Citation List

### Patent Literature

Patent Literature 1: JP 2013-11312 A

### Summary

### Technical Problem

The mechanical device of Patent Literature 1 further includes: a cover that covers the sensor and the transmitter in the housing; and a seal member that prevents dust, etc. from entering between the housing and the cover. In this manner, the presence of the sensor, etc. in the housing increases the number of components of the mechanical device of Patent Literature 1, making it difficult to allow the mechanical device to have a simple configuration. In addition, regarding a mechanical device having a shaft member and a bearing that rotate relative to each other, there is a demand for earlier detection of an abnormality in the mechanical device. The same applies to a mechanical device including two members that are movable relative to each other.

The present disclosure aims to achieve, in a mechanical device having two members that are movable relative to each other and in a temperature management system including the mechanical device, a simplified configuration and an earlier detection of an abnormality in the mechanical device.

### Solution to Problem

A mechanical device according to an aspect of the present disclosure includes: a first member; a second member to which the first member is attached so as to be movable relative thereto; and an RFID tag that includes a temperature sensor configured to detect a temperature of the first member and is configured to transmit the temperature detected by the temperature sensor to a reader/writer.

With this configuration, the temperature sensor is disposed in the first member, and the temperature detected by the temperature sensor is transmitted to the reader/writer. Accordingly, the temperature detected by the temperature sensor can be output with a simple configuration. In addition, the temperature detected by the temperature sensor can be output regardless of the position of the temperature sensor. This makes it possible to simplify the configuration of the mechanical device.

In addition, when the first member rises with the increase in the temperature of the first member, the dimensional relation between the first member and the second member changes. This leads to occurrence of an abnormality in the first member or the second member in some cases. That is, the detection of the temperature of the first member by the temperature sensor can achieve earlier detection of an abnormality in the mechanical device based on the temperature of the first member.

In the mechanical device according to an aspect of the present disclosure, the first member is a shaft member, the second member is a bearing that rotatably supports the first member, and the temperature sensor is disposed on an end surface of the first member.

With this configuration, even in a case where the mechanical device includes the shaft member and the bearing that rotatably supports the shaft member, it is possible, as described above, to simplify the configuration of the mechanical device and achieve earlier detection of an abnormality in the mechanical device based on the temperature of the screw shaft.

Furthermore, when the temperature sensor is disposed on the end surface of the shaft member, the centrifugal force acting on the temperature sensor can be reduced as compared with the case where the temperature sensor is disposed on the outer circumferential surface of the shaft member. Accordingly, occurrence of a failure of the temperature sensor can be reduced.

In the mechanical device according to an aspect of the present disclosure, the first member is a screw shaft, the second member is a nut fitted to the first member so as to be rotatable relative thereto, and the temperature sensor is disposed on an end surface of the first member.

With this configuration, even when the mechanical device includes the screw shaft and the nut fitted to the screw shaft so as to be rotatable relative thereto, it is possible, as described above, to simplify the configuration of the mechanical device and achieve earlier detection of an abnormality in the mechanical device based on the temperature of the screw shaft.

Furthermore, when the temperature sensor is disposed on the end surface of the screw shaft, the centrifugal force acting on the temperature sensor can be reduced as compared with the case where the temperature sensor is disposed on the outer circumferential surface of the screw shaft. Accordingly, occurrence of a failure of the temperature sensor can be reduced.

The mechanical device according to an aspect of the present disclosure further includes a plurality of rolling elements that roll between the first member and the second member. The second member is a guide rail. The first member is a slider slidably attached to the second member, and includes a circulation path along which the rolling elements circulate. The temperature sensor overlaps with the circulation path when the first member is viewed along a direction orthogonal to a sliding direction of the first member.

With this configuration, even when the mechanical device includes the guide rail and the slider slidably attached to the guide rail, it is possible, as described above, to simplify the configuration of the mechanical device and achieve earlier detection of the abnormality in the mechanical device based on the temperature of the slider.

Furthermore, the temperature of the portion of the slider in contact with the rolling element increases earlier than the temperatures of other portions. Accordingly, the portion where the temperature sensor is disposed on the outer surface of the slider increases early in response to the temperature increase in the slider. Thus, the mechanical device can achieve, with reliability, earlier detection of an abnormality by the temperature detected by the temperature sensor.

In the mechanical device according to an aspect of the present disclosure, the first member is a screw shaft, the second member is a nut fitted to the first member so as to be rotatable relative thereto, and the mechanical device further includes a second RFID tag that includes a second temperature sensor configured to detect a temperature of the second member and that is configured to transmit the temperature detected by the second temperature sensor to the reader/writer.

With this configuration, even when the mechanical device includes the screw shaft and the nut fitted to the screw shaft so as to be rotatable relative thereto, it is possible, as described above, to simplify the configuration of the mechanical device and achieve earlier detection of an abnormality in the mechanical device based on the temperature of the screw shaft and the temperature of the nut.

A temperature management system according to an aspect of the present disclosure includes the mechanical device; the reader/writer; and a control device that is electrically connected to the reader/writer and is configured to store the temperature detected by the temperature sensor.

With this configuration, the reader/writer easily acquires, from the mechanical device, the temperature detected by the temperature sensor. Accordingly, the control device can easily acquire, via the reader/writer, the temperature detected by the temperature sensor. This makes it possible for the temperature management system to achieve, with a simple configuration, earlier detection of an abnormality in the mechanical device.

The temperature management system according to an aspect of the present disclosure includes a plurality of the mechanical devices.

With this configuration, the control device can easily acquire, via the reader/writer, the temperatures detected by the temperature sensors. Accordingly, even in a case where the temperature management system includes a plurality of mechanical devices, it is possible to achieve, with a simple configuration, earlier detection of an abnormality in the mechanical devices.

In the temperature management system according to an aspect of the present, the first member is a screw shaft, the second member is a nut fitted to the first member so as to be rotatable relative thereto, and the control device is configured to control a rotation amount of the first member and adjust the rotation amount of the first member based on a result of the detection performed by the temperature sensor.

With this configuration, the control device adjusts the rotation amount of the screw shaft based on the temperature detected by the temperature sensor, thereby adjusting the movement amount of the nut. This makes it possible, in the mechanical device, to reduce the influence of the temperature change of the screw shaft.

In the temperature management system according to an aspect of the present, the first member is a screw shaft, and the second member is a nut fitted to the first member so as to be rotatable relative thereto. The mechanical device further includes: a plurality of balls that circulate in the second member; and a second RFID tag that includes a second temperature sensor configured to detect a temperature of the second member and that is configured to transmit the temperature detected by the second temperature sensor to the reader/writer. The control device detects an abnormality in the mechanical device when a temperature difference between the temperature detected by the temperature sensor and the temperature detected by the second temperature sensor is equal to or greater than a predetermined temperature difference.

With this configuration, the control device wirelessly acquires the temperature of the screw shaft and the temperature of the nut via the RFID tag, the second RFID tag, and the reader/writer. Accordingly, the control device can easily acquire the temperature of the screw shaft and the temperature of the nut even when the screw shaft rotates. Thus, the control device can easily manage the temperature of the screw shaft and the temperature of the nut.

In addition, when the temperature of the nut increases due to friction between the nut and the ball, for example, the temperature difference between the temperature of the nut and the temperature of the screw shaft becomes relatively large. When this increases the difference between the thermal expansion amount of the nut and the thermal expansion amount of the screw shaft, the friction between the screw shaft and the ball and the friction between the nut and the ball become relatively large, which may shorten the life of the mechanical device. In view of this, when the temperature difference between the temperature of the screw shaft and the temperature of the nut is equal to or greater than a predetermined temperature difference, the control device detects an abnormality in the mechanical device. This makes it possible for the temperature management system to suppress shortening of the life of the mechanical device.

In the temperature management system according to an aspect of the present, the RFID tag is disposed on an end surface of the first member.

With this configuration, the centrifugal force acting on the RFID tag can be reduced as compared with the case where the RFID tag is disposed on the outer circumferential surface of the screw shaft. Accordingly, occurrence of a failure of the RFID tag can be reduced.

In the temperature management system according to an aspect of the present, the second member includes: a main body having a through-hole through which the first member passes; and a plurality of circulation members constituting a path for the balls. Each of the circulation members has a protrusion protruding from the main body, and the second RFID tag is disposed at a portion between two of the protrusions in the main body.

When the friction between the circulation member and the ball becomes relatively large, the temperature of the circulation member increases relatively early. Thus, the second temperature sensor of the second RFID tag detects the increase in the temperature of the circulation member at an early stage. This leads to an early increase of the temperature difference between the detection result of the temperature sensor and the detection result of the second temperature sensor. The temperature management system can therefore achieve early detection of an abnormality in the mechanical device.

In the temperature management system according to an aspect of the present, the second temperature sensor overlaps a path for the balls included in the second member when viewed along a radial direction of the first member.

With this configuration, when the temperature of the nut increases due to friction between the ball and the nut, the temperature of the nut increases relatively early in the vicinity of the path of the balls. Thus the second temperature sensor detects the temperature increase in the nut in the vicinity of the path of the balls at an early stage. This leads to an early increase of the temperature difference between the temperature detected by the temperature sensor and the temperature detected by the second temperature sensor. This makes it possible for the temperature management system to achieve early detection of an abnormality in the mechanical device.

The temperature management system according to an aspect of the present includes a plurality of the second RFID tags, and the second RFID tags are arranged in a line along a central axis of the first member.

With this configuration, by moving the reader/writer along the central axis of the screw shaft, the user can easily acquire the temperatures detected by the second temperature sensors. This enables easy management of the temperature of the nut.

The temperature management system according to an aspect of the present includes a plurality of the second RFID tags. The control device detects an abnormality in the mechanical device when a temperature difference between the detection result of the temperature sensor and a detection result of the second temperature sensor of at least one of the second RFID tags is equal to or greater than a predetermined temperature difference.

With this configuration, even when there is an abnormality in a part of the mechanical device, the abnormality in the mechanical device can be detected at an early stage.

### Advantageous Effects of Invention

According to the present disclosure, it is possible, in the mechanical device having two members that are movable relative to each other and in a temperature management system including the mechanical device, to achieve a simplified configuration and an earlier detection of an abnormality in the mechanical device.

### Brief Description of Drawings

FIG. 1 is a diagram illustrating a configuration of a temperature management system according to a first embodiment of the present disclosure.
FIG. 2 is a diagram of the mechanical device illustrated in FIG. 1 as viewed along a central axis of a shaft member.
FIG. 3 is a cross-sectional view of the mechanical device taken along line III-III illustrated in FIG. 2.
FIG. 4 is a plan view of a temperature detection device illustrated in FIG. 2.
FIG. 5 is an enlarged cross-sectional view of the temperature detection device illustrated in FIG. 3.
FIG. 6 is a block diagram of an RFID tag.
FIG. 7 is a cross-sectional view of a temperature detection device in a mechanical device according to a first modification of the first embodiment of the present disclosure.
FIG. 8 is a cross-sectional view of a temperature detection device in a mechanical device according to a second modification of the first embodiment of the present disclosure.
FIG. 9 is a cross-sectional view of a temperature detection device in a mechanical device according to a third modification of the first embodiment of the present disclosure.
FIG. 10 is a diagram illustrating a configuration of a temperature management system according to a second embodiment of the present disclosure.
FIG. 11 is a side view of a ball screw illustrated in FIG. 10.
FIG. 12 is a diagram illustrating a configuration of a temperature management system according to a third embodiment of the present disclosure.
FIG. 13 is a diagram illustrating a configuration of the mechanical device illustrated in FIG. 12.
FIG. 14 is a cross-sectional view of the mechanical device taken along line XIV-XIV illustrated in FIG. 13.
FIG. 15 is a diagram illustrating a cross section of the temperature detection device illustrated in FIG. 14.
FIG. 16 is a diagram illustrating a configuration of a temperature management system according to a fourth embodiment of the present disclosure.
FIG. 17 is a side view of the mechanical device as viewed along arrow XVII illustrated in FIG. 16.
FIG. 18 is a diagram illustrating a cross section of a first temperature detection device illustrated in FIG. 16.
FIG. 19 is a partial cross-sectional view along a central axis of a mechanical device included in a temperature management system according to a modification of the fourth embodiment of the present disclosure.
FIG. 20 is a cross-sectional view of the mechanical device taken along line XX-XX illustrated in FIG. 19.

### Description of Embodiments

Hereinafter, embodiments according to the present disclosure will be described with reference to the drawings, but the present disclosure is not limited thereto. The constituent elements of each embodiment and each modification described below can be appropriately combined. In addition, some components are not used in some cases.

### <First embodiment>

### <Temperature management system 1>

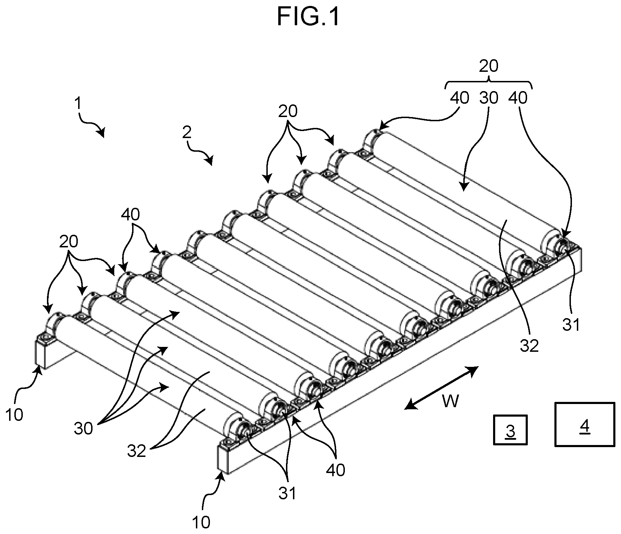

FIG. 1 is a diagram illustrating a configuration of a temperature management system 1 according to a first embodiment of the present disclosure. The temperature management system 1 of the first embodiment is a system that manages the temperature of a bearing 42 to be described later and detects an abnormality in the bearing 42, that is, an abnormality in a mechanical device 20.

The temperature management system 1 includes a conveyance device 2, a reader/writer 3, and a control device 4. The temperature management system 1 may include a plurality of the conveyance devices 2.

The conveyance device 2 is a roller conveyor that conveys an industrial product along a conveyance direction W. The conveyance device 2 includes a pair of support bases 10 and a plurality of mechanical devices 20. In the present embodiment, the number of the mechanical devices 20 is ten, but the number is not limited to this.

The pair of support bases 10 supports the mechanical devices 20. Each of the support bases 10 has a rectangular parallelepiped shape extending along the conveyance direction W.

The mechanical device 20 includes a roller member 30 and a pair of mechanical components 40.

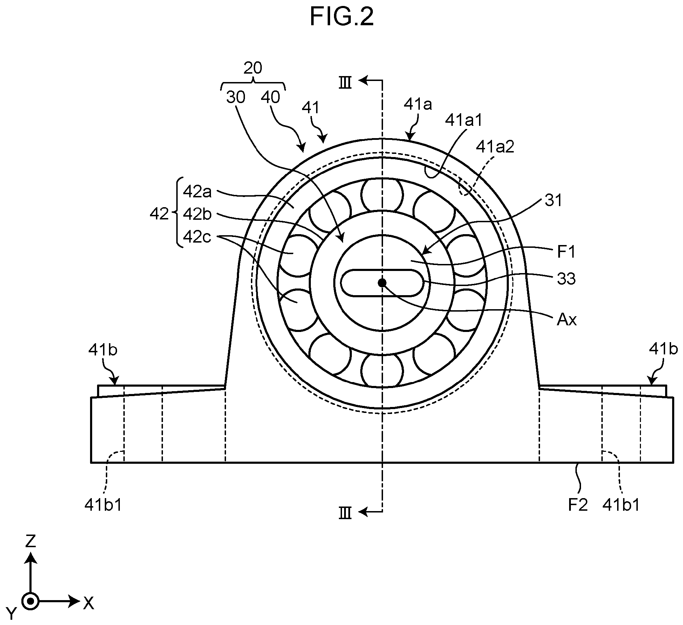

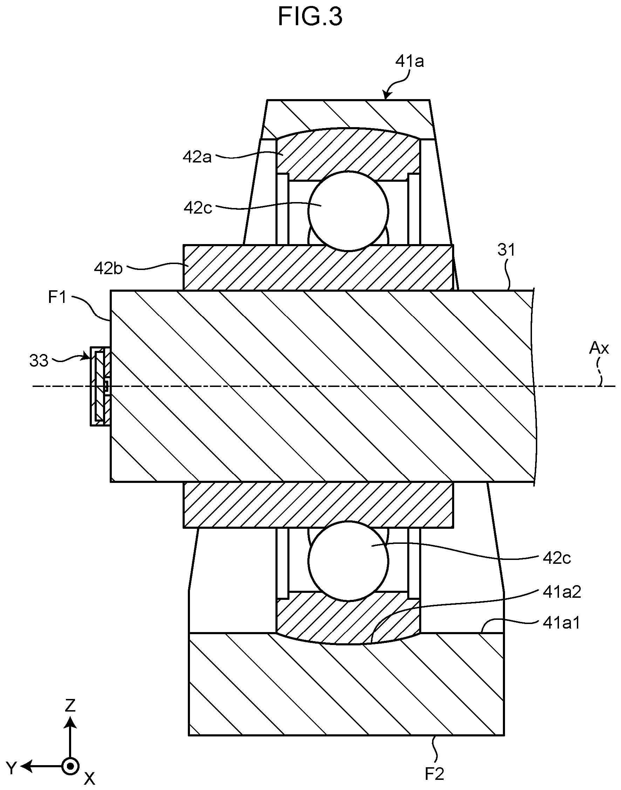

The roller member 30 includes a shaft member 31 (corresponding to a "first member" in the first embodiment) and a roller 32. The shaft member 31 has a columnar shape extending along a central axis Ax (refer to FIGS. 2 and 3 described later). A Radio Frequency Identification (RFID) tag 33a integrally formed with a temperature sensor 33b to be described later is attached to the shaft member 31. Details of the temperature sensor 33b and the RFID tag 33a will be described later.

The roller 32 has a cylindrical shape disposed on the circumferential side surface of the shaft member 31, and rotates integrally with the shaft member 31. Both ends of the shaft member 31 are exposed from the roller 32.

The pair of mechanical components 40 rotatably supports the roller member 30. Specifically, the pair of mechanical components 40 rotatably supports both ends of the shaft member 31. The mechanical component 40 is a plummer block. The mechanical component 40 includes the bearing 42 (corresponding to a "second member" in the first embodiment). Details of the mechanical component 40 will be described later.

The pair of mechanical components 40 is fixed to the pair of support bases 10 by using, for example, fixing bolts, whereby the mechanical devices 20 are supported by the pair of support bases 10. The mechanical devices 20 are disposed in a state where the central axes Ax of the shaft members 31 are parallel to each other and the central axis Ax of each shaft member 31 is orthogonal to the conveyance direction W.

The reader/writer 3 wirelessly communicates with the RFID tag 33a included in the mechanical device 20. The reader/writer 3 can be carried by a user. The reader/writer 3 is electrically connected to the control device 4 in a wired or wireless connection.

The user operates the reader/writer 3 to transmit a carrier wave from the reader/writer 3 toward the RFID tag 33a. In response to this, the RFID tag 33a transmits, to the reader/writer 3, the temperature that has been detected by the temperature sensor 33b (hereinafter, denoted as the temperature detected by the temperature sensor 33b). The reader/writer 3 acquires the temperature detected by the temperature sensor 33b and transmits the acquired temperature to the control device 4.

The reader/writer 3 wirelessly communicate with a plurality of the RFID tags 33a simultaneously. Accordingly, the reader/writer 3 can relatively quickly acquire the temperatures detected by the temperature sensors 33b. The reader/writer 3 transmits the temperatures detected by the temperature sensors 33b to the control device 4.

The control device 4 is a computer, and includes, for example, a Central Processing Unit (CPU), Read Only Memory (ROM), Random Access Memory (RAM), an internal storage, an input interface, and an output interface. The CPU, the ROM, the RAM, and the internal storage are connected to each other by an internal bus. The ROM stores programs such as BIOS. The internal storage is, for example, a Hard Disk Drive (HDD), flash memory, or/and the like, and stores an operating system program and an application program. The CPU executes a program stored in the ROM or the internal storage using the RAM as a work area to implement various functions.

The control device 4 acquires the temperature detected by the temperature sensor 33b from the reader/writer 3. Based on the temperature detected by the temperature sensor 33b, the control device 4 detects an abnormality in the bearing 42 before occurrence of a failure of the bearing 42 in the mechanical component 40.

The abnormality in the bearing 42 occurs when the temperature of the shaft member 31 increases to change the dimensional relation between the shaft member 31 and the bearing 42 (details will be described later). Disregarding the abnormality in the bearing 42 leads to the failure of the bearing 42 and the failure of the mechanical component 40. Therefore, the control device 4 detects the abnormality in the bearing 42 occurring before occurrence of the failure of the bearing 42.

When the temperature detected by the temperature sensor 33b is equal to or greater than a predetermined temperature, the control device 4 determines that there is an abnormality in the bearing 42. The predetermined temperature is determined to be a temperature at which the bearing 42 is not damaged, for example, and is stored in advance in the internal storage of the control device 4. Based on the determination result of the control device 4, the user examines the mechanical device 20 determined to have an abnormality.

By periodically checking, by the control device 4, the temperature detected by the temperature sensor 33b, the user can detect abnormalities in the bearing 42, that is, abnormalities in the mechanical device 20, at an early stage.

As described above, according to the present embodiment, the temperature management system 1 includes: the mechanical device 20; the reader/writer 3; and the control device 4 electrically connected to the reader/writer 3 and configured to store the temperature detected by the temperature sensor 33b.

With this configuration, the reader/writer 3 easily acquires, from the mechanical device 20, the temperature detected by the temperature sensor 33b. Accordingly, the control device 4 can easily acquire the temperature detected by the temperature sensor 33b, via the reader/writer 3. The temperature management system 1 can achieve, with a simple configuration, earlier detection of an abnormality in the mechanical device 20.

The temperature management system 1 includes the mechanical devices 20.

With this configuration, the control device 4 can easily acquire the temperatures detected by the temperature sensors 33b, via the reader/writer 3. Accordingly, even in a case of including the mechanical devices 20, the temperature management system 1 can achieve, with a simple configuration, earlier detection of an abnormality in the mechanical device 20.

### <Mechanical device 20>

In the following description, a Z direction illustrated in the drawings is an up-down direction of the mechanical component 40, an X direction is a left-right direction of the mechanical component 40, and a Y direction is a front-rear direction of the mechanical component 40. The X direction, the Y direction, and the Z direction are orthogonal to each other. The central axis Ax of the shaft member 31 extends along the Y direction. The directions of X, Y, and Z are examples, and the present disclosure is not limited to these directions.

FIG. 2 is a diagram of the mechanical device 20 illustrated in FIG. 1 as viewed along the central axis Ax of the shaft member 31. FIG. 3 is a cross-sectional view of the mechanical device 20 taken along line III-III illustrated in FIG. 2. FIGS. 2 and 3 omit illustrations of the roller 32 of the roller member 30.

As illustrated in FIGS. 2 and 3, the roller member 30 includes a temperature detection device 33. The temperature detection device 33 is disposed on the shaft member 31 and detects the temperature of the shaft member 31. The temperature detection device 33 is disposed on an end surface F1 of the shaft member 31.

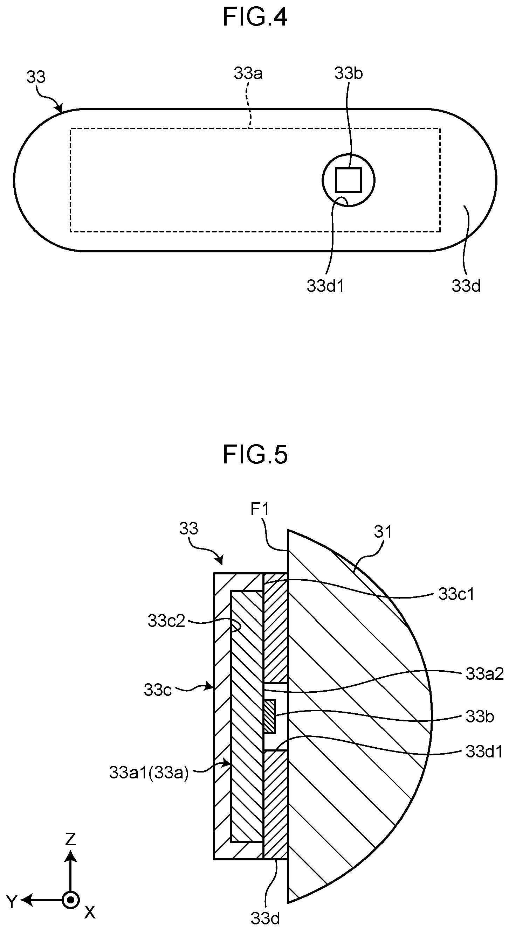

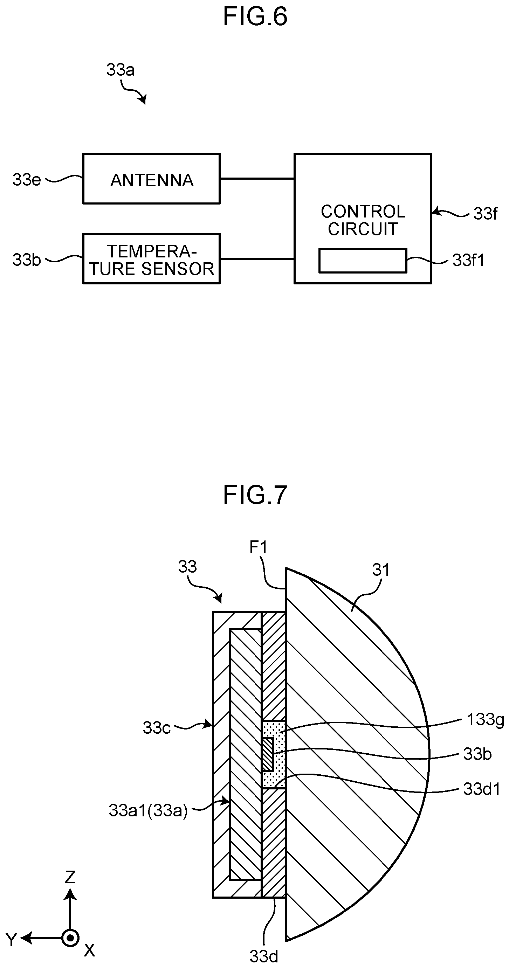

FIG. 4 is a plan view of the temperature detection device 33 illustrated in FIG. 2. FIG. 5 is an enlarged cross-sectional view of the temperature detection device 33 illustrated in FIG. 3. FIG. 6 is a block diagram of the RFID tag 33a.

The temperature detection device 33 includes an RFID tag 33a, a temperature sensor 33b, a cover member 33c, and an adhesive member 33d. The RFID tag 33a is formed integrally with the temperature sensor 33b.

The RFID tag 33a is a passive RFID tag. The RFID tag 33a includes a substrate 33a1 illustrated in FIG. 5. A temperature sensor 33b, an antenna 33e illustrated in FIG. 6, and a control circuit 33f are disposed on the substrate 33a1.

The temperature sensor 33b detects the temperature of the shaft member 31. That is, the temperature detected by the temperature sensor 33b corresponds to the temperature detected by the temperature detection device 33.

As illustrated in FIG. 5, the temperature sensor 33b is disposed on a principal surface 33a2 of the substrate 33a1. In a state where the temperature detection device 33 is disposed on the shaft member 31, the temperature sensor 33b faces the end surface F1 of the shaft member 31. There is a space between the temperature sensor 33b and the end surface F1 of the shaft member 31. This configuration inhibits the transmission of vibration of the shaft member 31 to the temperature sensor 33b, thus reducing the failure of the temperature sensor 33b.

The control circuit 33f illustrated in FIG. 6 is electrically connected to the temperature sensor 33b and the antenna 33e. The antenna 33e receives the carrier wave from the reader/writer 3. The control circuit 33f is driven by power generated by the carrier wave.

The control circuit 33f acquires the temperature detected by the temperature sensor 33b and stores the acquired temperature in a storage region 33f1. The control circuit 33f transmits the temperature detected by the temperature sensor 33b and stored in the storage region 33f1 to the reader/writer 3 via the antenna 33e.

In addition, the control circuit 33f transmits, to the reader/writer 3, identification information (for example, an identification number) identifying the mechanical device 20 in association with the temperature detected by the temperature sensor 33b. The identification information is stored in advance in the storage region 33f1 by the reader/writer 3. The control device 4 stores the temperature detected by the temperature sensor 33b and the identification information such that the temperature and the identification information are associated with each other. Accordingly, the control device 4 can identify the mechanical device 20 determined to have an abnormality in the bearing 42.

The cover member 33c illustrated in FIG. 5 protects the RFID tag 33a. The cover member 33c has a flat plate shape including a disposition surface 33c1. The disposition surface 33c1 is flat. The disposition surface 33c1 has a recess 33c2 in which the RFID tag 33a is disposed. In a plan view of the cover member 33c, the recess 33c2 is positioned at a central portion of the cover member 33c.

In addition, in a state where the RFID tag 33a is disposed in the recess 33c2, the disposition surface 33c1 of the cover member 33c and the principal surface 33a2 of the substrate 33a1 are on an identical plane. That is, in a state where the RFID tag 33a is disposed in the recess 33c2, the disposition surface 33c1 is provided over the entire circumference around the principal surface 33a2 of the substrate 33a1. The disposition surface 33c1 of the cover member 33c and the principal surface 33a2 of the substrate 33a1 may be on mutually different planes. In addition, the temperature sensor 33b protrudes from the disposition surface 33c1 in a state where the RFID tag 33a is disposed in the recess 33c2.

The material of the cover member 33c is thermoplastic resin. Specifically, the material of the cover member 33c is a nylon resin having waterproofness and oil resistance. Accordingly, the cover member 33c has waterproofness and oil resistance. The waterproofness and oil resistance of the cover member 33c inhibits a property change in the cover member 33c that would be caused by, for example, water, and oil and grease used for the mechanical device 20 during the use period of the mechanical device 20, whereby no problem occurs in operations of the temperature sensor 33b and the RFID tag 33a.

The adhesive member 33d is disposed on the disposition surface 33c1 of the cover member 33c, and bonds the RFID tag 33a and the cover member 33c to the end surface F1 of the shaft member 31. The adhesive member 33d is also disposed on the principal surface 33a2 of the substrate 33a1. The adhesive member 33d has a third through-hole 33d1 having an inner side where the temperature sensor 33b is disposed. With this configuration, the temperature sensor 33b faces the end surface F1 of the shaft member 31 with a space therebetween. In addition, the space between the temperature sensor 33b and the end surface F1 of the shaft member 31 can be reduced by the third through-hole 33d1. Accordingly, the temperature sensor 33b can detect the temperature of the shaft member 31 with high accuracy.

The adhesive member 33d is a double-sided tape. The adhesive member 33d has waterproofness. The adhesive member 33d is also referred to as a waterproof tape. The waterproofness of the adhesive member 33d inhibits a property change in the adhesive member 33d that would be caused by water during the use period of the mechanical component 40, whereby no problem occurs in operations of the temperature sensor 33b and the RFID tag 33a.

In addition, the adhesive member 33d is disposed on the disposition surface 33c1 of the cover member 33c, over the entire circumference around the RFID tag 33a. Accordingly, watertightness is ensured between the cover member 33c and the outer surface of a housing 41, thereby reducing the adhesion of water to the temperature sensor 33b and the RFID tag 33a.

The mechanical component 40 illustrated in FIGS. 2 and 3 includes the housing 41 and a bearing 42.

The housing 41 integrally includes a main body 41a and a flange 41b. The main body 41a has a first through-hole 41a1 through which the shaft member 31 passes.

The flange 41b is provided on both sides of the main body 41a in the X direction. The flange 41b has a second through-hole 41b1 through which a bolt for attaching the mechanical component 40 to the support base 10 passes. The lower surface (surface on the -Z side) of the housing 41 corresponds to an attachment surface F2 in contact with the support base 10.

The bearing 42 is disposed in the housing 41 and rotatably supports the shaft member 31 with respect to the housing 41. The axis of the bearing 42 is substantially parallel to the central axis Ax of the shaft member 31.

The bearing 42 is a ball bearing. Alternatively, the bearing 42 may be a roller bearing. The bearing 42 is disposed in the first through-hole 41a1. The bearing 42 includes an outer ring 42a, an inner ring 42b, and a plurality of balls 42c.

The outer ring 42a is fitted into a groove 41a2 having an annular shape and located in the inner circumferential surface of the first through-hole 41a1. The outer ring 42a is fixed to the housing 41. The inner ring 42b is provided on the inner side of the outer ring 42a. The shaft member 31 is fixed to the inner ring 42b so as to be rotatable integrally therewith. The inner circumferential surface of the inner ring 42b and the outer circumferential surface of the shaft member 31 are in contact with each other. The balls 42c are disposed between the outer ring 42a and the inner ring 42b.

A preload is applied to the bearing 42. The preload application is application, to the bearing 42, of an axial load (load in a direction orthogonal to the axis of the bearing 42) that sets the gap between the outer ring 42a and the ball 42c and the gap between the inner ring 42b and the ball 42c to negative gaps. Alternatively, the preload need not be applied to the bearing 42.

When the shaft member 31 rotates with respect to the housing 41, the inner ring 42b rotates with respect to the outer ring 42a. At this time, the balls 42c roll with respect to the outer ring 42a and the inner ring 42b.

Next, operation of the mechanical component 40 when an abnormality occurs in the bearing 42 will be described.

When the conveyance device 2 illustrated in FIG. 1 conveys an industrial product, a load from the shaft member 31 acts on the bearing 42. The load from the shaft member 31 generates frictional forces between the ball 42c and the inner ring 42b and between the ball 42c and the outer ring 42a. If a state change of the bearing 42 progresses due to the frictional force, an abnormality such as damage in the bearing 42 may occur in some cases. The worsened abnormality in the bearing 42 leads to an occurrence of a failure such as seizure of the bearing 42.

An increase in the temperature of the shaft member 31 causes expansion of the shaft member 31. The expansion of the shaft member 31 changes the dimensional relation between the shaft member 31 and the bearing 42, causing the shaft member 31 to push and spread the inner ring 42b. This changes the dimensional relation of the bearing 42, thus increasing the frictional forces between the ball 42c and the inner ring 42b and between the ball 42c and the outer ring 42a. When the preload is applied to the bearing 42 as described above, the frictional force is further increased as compared with a case where no preload is applied to the bearing 42, leading to an occurrence of an abnormality such as damage of the bearing 42 with high probability.

As described above, the temperature detection device 33 is disposed on the shaft member 31. Accordingly, the temperature detected by the temperature detection device 33 increases early in response to the temperature increase in the shaft member 31.

As described above, the temperature detected by the temperature detection device 33 is stored in the control device 4 via the reader/writer 3. Furthermore, when the temperature detected by the temperature detection device 33 is equal to or greater than a predetermined temperature, the control device 4 determines that there is an abnormality in the bearing 42. Therefore, by disposing the temperature detection device 33 on the shaft member 31, it is possible to achieve earlier detection of an abnormality in the bearing 42, that is, an abnormality in the mechanical device 20.

As described above, according to the present embodiment, the mechanical device 20 includes: the shaft member 31; the bearing 42 that supports the shaft member 31 so that the shaft member is rotatable (movable relative thereto); and the RFID tag 33a that includes the temperature sensor 33b configured to detect the temperature of the shaft member 31 and transmits the temperature detected by the temperature sensor 33b to the reader/writer 3. The temperature sensor 33b is disposed on the end surface F1 of the shaft member 31.

With this configuration, the temperature sensor 33b is disposed on the shaft member 31, and the temperature detected by the temperature sensor 33b is transmitted to the reader/writer 3. Accordingly, the temperature detected by the temperature sensor 33b can be output with a simple configuration. In addition, the temperature detected by the temperature sensor 33b can be output regardless of the position of the temperature sensor 33b. This can simplify the configuration of the mechanical device 20.

In addition, the expansion of the shaft member 31 due to the increase in the temperature of the shaft member 31 changes the dimensional relation between the shaft member 31 and the bearing 42. This causes occurrence of abnormality in the bearing 42 in some cases. That is, the detection of the temperature of the shaft member 31 by the temperature sensor 33b can contribute to earlier detection of an abnormality in the bearing 42 and an abnormality in the mechanical device 20 based on the temperature of the shaft member 31.

Furthermore, when the temperature sensor 33b is disposed on the end surface F1 of the shaft member 31, the centrifugal force acting on the temperature sensor 33b can be reduced as compared with the case where the temperature sensor 33b is disposed on the outer circumferential surface of the shaft member 31. Accordingly, occurrence of a failure of the temperature sensor 33b can be reduced.

Next, the temperature management system 1 and the mechanical device 20 according to a modification of the embodiment of the present disclosure will be described focusing mainly on differences from the mechanical device 20 of the above-described embodiment.

For example, the temperature management system 1 may include a device including the mechanical device 20, instead of the conveyance device 2.

The mechanical component 40 is not limited to the plummer block. The mechanical component 40 only needs to include the bearing 42.

The temperature detection device 33 may be disposed on the circumferential side surface of the shaft member 31.

The RFID tag 33a may be an active-type RFID tag. In this case, the RFID tag 33a further includes a power source.

The adhesive member 33d may have elasticity. In this case, the adhesive member 33d includes: a sheet-like base having elasticity; and adhesive layers disposed on the surfaces of the base, for example. The base is formed of a foamed resin such as foamed polyethylene, for example. The vibration that would be transmitted from the shaft member 31 to the temperature sensor 33b and the RFID tag 33a when the conveyance device 2 is operating can be reduced by the elasticity of the adhesive member 33d.

The adhesive member 33d may be formed by curing an adhesive (for example, an epoxy adhesive). Alternatively, the adhesive member 33d may be a butyl tape having waterproofness and oil resistance.

Alternatively, the temperature detection device 33 need not include the adhesive member 33d. In this case, the temperature detection device 33 is fixed to the shaft member 31 by a bolt, for example.

The cover member 33c may have a shape that covers a part of the principal surface 33a2 of the substrate 33a1 in a state where the temperature sensor 33b is exposed.

FIG. 7 is a cross-sectional view of a temperature detection device 33 in the mechanical device 20 according to a first modification of the first embodiment of the present disclosure.

The mechanical device 20 according to the first modification further includes a thermal conductive paste 133g. The thermal conductive paste 133g is silicone-based thermal conductive grease, for example. The thermal conductive paste 133g is not limited to a silicone-based paste, and only needs to be a paste. Alternatively, the thermal conductive paste 133g may be a thermosetting resin (an epoxy resin, for example) containing particles of Ag, etc. having a relatively high thermal conductivity.

The thermal conductive paste 133g is filled in the third through-hole 33d1 in a state where the temperature detection device 33 is disposed on the shaft member 31. With this configuration, the temperature sensor 33b and the shaft member 31 are thermally connected to each other via the thermal conductive paste 133g.

In the mechanical device 20 according to the first modification, the heat of the shaft member 31 is transferred to the temperature sensor 33b through the thermal conductive paste 133g with higher efficiency as compared with the mechanical device 20 of the above embodiment.

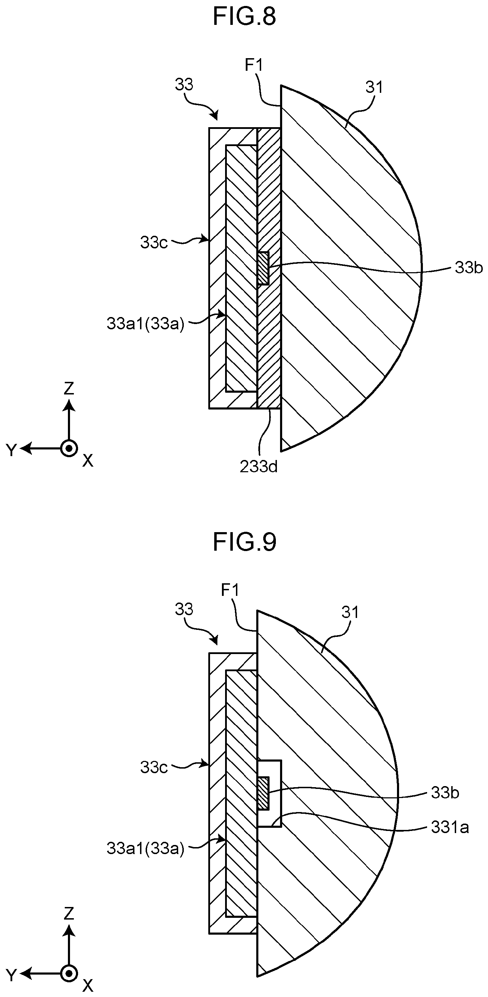

FIG. 8 is a cross-sectional view of a temperature detection device 33 in the mechanical device 20 according to a second modification of the first embodiment of the present disclosure. In the second modification, an adhesive member 233d does not have the third through-hole 33d1. The adhesive member 233d covers the entire RFID tag 33a. With this configuration, the temperature sensor 33b is covered with the adhesive member 233d. With this configuration, the temperature sensor 33b and the shaft member 31 are thermally connected to each other via the adhesive member 233d.

In the mechanical device 20 according to the second modification, the heat of the shaft member 31 is transferred to the temperature sensor 33b via the adhesive member 233d with higher efficiency as compared with the mechanical device 20 of the above embodiment. The adhesive member 233d may contain particles of Ag, etc. having a relatively high thermal conductivity. In this case, the heat of the shaft member 31 is transferred to the temperature sensor 33b with even higher efficiency via the adhesive member 233d.

FIG. 9 is a cross-sectional view of a temperature detection device 33 in the mechanical device 20 according to a third modification of the first embodiment of the present disclosure. In the third modification, the shaft member 31 has a recess 331a into which the temperature sensor 33b is fitted. FIG. 9 omits illustration of the adhesive member 33d. In the third modification, the adhesive member 33d may be formed by curing a cyanoacrylate-based adhesive, for example. In this case, the thickness of the adhesive member 33d can be reduced.

In the mechanical device 20 of the third modification, the temperature sensor 33b is provided on the inner side of the recess 331a, whereby the temperature sensor 33b can detect the temperature of the shaft member 31 with higher accuracy.

### <Second embodiment>

### <Temperature management system 1a and Mechanical device 402>

Next, a temperature management system 1a and a mechanical device 402 according to a second embodiment of the present disclosure will be described focusing mainly on differences from the temperature management system 1 of the first embodiment described above.

In the following description, a Z direction illustrated in the drawings is a height direction of the mechanical device 402 to be described later, an X direction is a left-right direction of the mechanical device 402, and a Y direction is a front-rear direction of the mechanical device 402. The X direction, the Y direction, and the Z direction are orthogonal to each other. The directions of X, Y, and Z are examples, and the present disclosure is not limited to these directions.

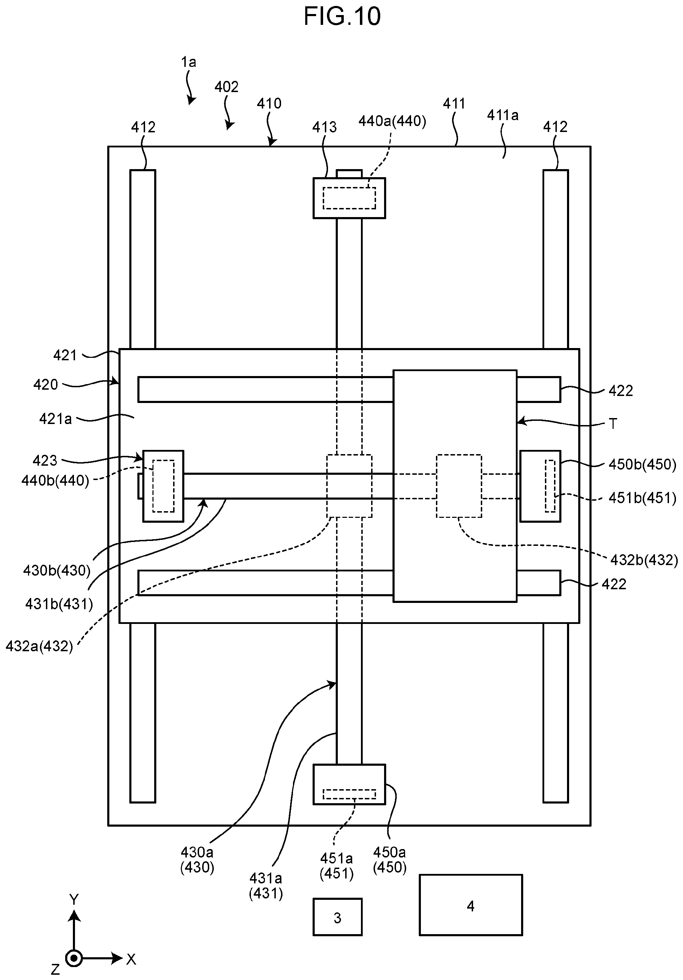

FIG. 10 is a diagram illustrating a configuration of the temperature management system 1a according to the second embodiment of the present disclosure. The temperature management system 1a of the second embodiment is a system that manages a temperature of a screw shaft 431 to be described later and detects an abnormality in a bearing 440 to be described later. The temperature management system 1a is applied to a machine tool that machines a workpiece, for example.

The temperature management system 1a includes a mechanical device 402, the reader/writer 3, and the control device 4. The reader/writer 3 and the control device 4 are the same as the reader/writer 3 and the control device 4 of the first embodiment described above.

The mechanical device 402 is an XY table that moves the workpiece along the X direction and the Y direction. The mechanical device 402 includes a fixing unit 410, a moving unit 420, and a table T on which a workpiece is disposed.

The fixing unit 410 includes a first base 411, a pair of first guide rails 412, and a first ball screw 430a. The pair of first guide rails 412 and the first ball screw 430a are disposed on an upper surface 411a (surface on the +Z side) of the first base 411.

The pair of first guide rails 412 extends along the Y direction and guides the moving unit 420. The first ball screw 430a includes a first screw shaft 431a and a first nut 432a.

The first screw shaft 431a extends along the Y direction. A first end of the first screw shaft 431a is supported by a first support 413. The first support 413 includes a first bearing 440a that rotatably supports the first screw shaft 431a. The first bearing 440a is a ball bearing. Alternatively, the first bearing 440a may be a roller bearing.

A second end of the first screw shaft 431a is fixed to the output shaft of a first motor 450a so as to be rotatable integrally therewith. The first motor 450a rotates the first screw shaft 431a. The first motor 450a includes a first rotary encoder 451a that detects the rotation amount of the output shaft. The detection result of the first rotary encoder 451a is transmitted to the control device 4.

The first nut 432a is fitted to the first screw shaft 431a so as to be rotatable relative thereto. A plurality of balls are disposed on the inner side of the first nut 432a. The rotation of the first screw shaft 431a causes the balls to circulate in the first nut 432a. The moving unit 420 is fixed to the first nut 432a. The rotation of the first screw shaft 431a causes the first nut 432a and the moving unit 420 to move along the Y direction.

The moving unit 420 includes a second base 421, a pair of second guide rails 422, and a second ball screw 430b. A first nut 432a is fixed to the surface on the -Z side of the second base 421. The pair of second guide rails 422 and the second ball screw 430b are disposed on an upper surface 21a (surface on the +Z side) of the second base 421.

The pair of second guide rails 422 extends along the X direction and guides the table T. The second ball screw 430b includes a second screw shaft 431b and a second nut 432b.

The second screw shaft 431b extends along the X direction. A first end of the second screw shaft 431b is supported by a second support 423. The second support 423 includes a second bearing 440b that rotatably supports the second screw shaft 431b. The second bearing 440b is a ball bearing. Alternatively, the second bearing 440b may be a roller bearing.

A second end of the second screw shaft 431b is fixed to the output shaft of the second motor 450b so as to be rotatable integrally therewith. The second motor 450b rotates the second screw shaft 431b. The second motor 450b includes a second rotary encoder 451b that detects the rotation amount of the output shaft. The detection result of the second rotary encoder 451b is transmitted to the control device 4.

The second nut 432b is fitted to the second screw shaft 431b so as to be rotatable relative thereto. A plurality of balls are disposed on the inner side of the second nut 432b. The rotation of the second screw shaft 431b causes the balls to circulate in the second nut 432b. The table T is fixed to the second nut 432b. The rotation of the second screw shaft 431b causes the second nut 432b and the table T to move along the X direction.

The first ball screw 430a and the second ball screw 430b are configured similarly to each other. That is, the first screw shaft 431a and the second screw shaft 431b are configured similarly to each other. The first nut 432a and the second nut 432b are configured similarly to each other.

Furthermore, the first bearing 440a and the second bearing 440b are configured similarly to each other. The first motor 450a and the second motor 450b are configured similarly to each other. The first rotary encoder 451a and the second rotary encoder 451b are configured similarly to each other.

Hereinafter, when the first ball screw 430a and the second ball screw 430b are described with no mutual distinction, each of the components is simply denoted as the "ball screw 430". Similarly, when the first screw shaft 431a and the second screw shaft 431b are described with no mutual distinction, each of the components is simply denoted as the "screw shaft 431", and when the first nut 432a and the second nut 432b are described with no mutual distinction, each of the components is simply denoted as the "nut 432". The screw shaft 431 corresponds to a "first member" in the second embodiment. The "nut 432" corresponds to a "second member" in the second embodiment.

When the first bearing 440a and the second bearing 440b are described with no mutual distinction, each of the components is simply denoted as the "bearing 440". When the first motor 450a and the second motor 450b are described with no mutual distinction, each of the components is simply denoted as the "motor 450", and when the first rotary encoder 451a and the second rotary encoder 451b are described with no mutual distinction, each of the components is simply denoted as the "rotary encoder 451".

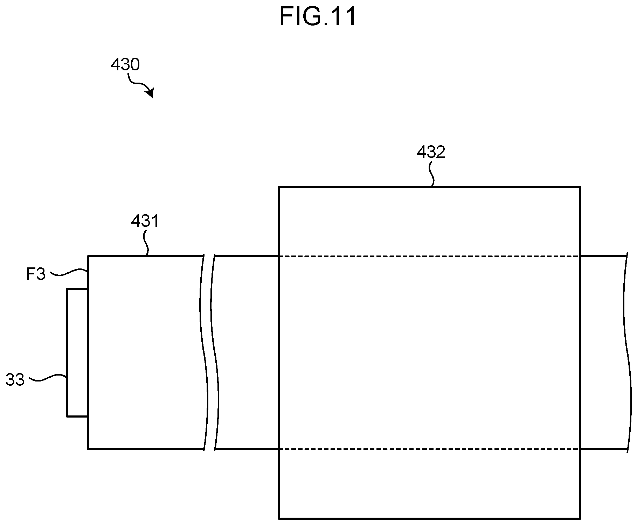

FIG. 11 is a side view of the ball screw 430 illustrated in FIG. 10. The ball screw 430 further includes a temperature detection device 33. The temperature detection device 33 detects the temperature of the screw shaft 431. The temperature detection device 33 is disposed on an end surface F3 of the screw shaft 431. The temperature detection device 33 is the same as the temperature detection device 33 of the first embodiment described above.

The temperature sensor 33b detects the temperature of the screw shaft 431. That is, the temperature detected by the temperature sensor 33b corresponds to the temperature detected by the temperature detection device 33. In a state where the temperature detection device 33 is disposed on the screw shaft 431, the temperature sensor 33b faces the end surface F3 of the screw shaft 431 similarly to the first embodiment.

The reader/writer 3 illustrated in FIG. 10 wirelessly communicates with the RFID tag 33a similarly to the first embodiment. Accordingly, the reader/writer 3 and the RFID tag 33a can communicate with each other even when the screw shaft 431 rotates.

The control device 4 controls the rotation amount of the screw shaft 431 to adjust the position of the table T. Specifically, the control device 4 calculates the movement amount of the table T in the X direction and the movement amount of the table T in the Y direction based on the difference between the target position and the current position of the table T. The movement amount of the table T in the X direction corresponds to the movement amount of the second nut 432b. The movement amount of the table T in the Y direction corresponds to the movement amount of the first nut 432a.

The movement amount of the nut 432 is derived based on the rotation angle (general angle) of the screw shaft 431 and the lead of the screw shaft 431. The rotation angle of the screw shaft 431 corresponds to the rotation amount of the screw shaft 431. The rotation amount of the screw shaft 431 corresponds to the rotation amount of the motor 450. The control device 4 controls the rotation amount of the motor 450 to control the rotation amount of the screw shaft 431. The control device 4 controls the rotation amount of the motor 450 based on the detection result of the rotary encoder 451.

The control device 4 derives the rotation amount of the motor 450 based on the movement amount of the table T, and drives the motor 450 with the derived rotation amount of the motor 450. Thus, the table T is caused to be positioned at the target position.

When the temperature of the screw shaft 431 changes, the length of the screw shaft 431 and changes the lead of the screw shaft 431 changes. The change in the lead of the screw shaft 431 affects the movement amount of the nut 432 and the position of the table T. In view of this, the control device 4 adjusts the rotation amount of the screw shaft 431 based on the temperature detected by the temperature sensor 33b. The control device 4 adjusts the rotation amount of the motor 450 to adjust the rotation amount of the screw shaft 431

Similarly to the first embodiment, the reader/writer 3 wirelessly communicates with the RFID tag 33a included in the mechanical device 402.

The control device 4 acquires the temperature detected by the temperature sensor 33b from the reader/writer 3 similarly to the first embodiment. The control device 4 derives an adjustment coefficient using the temperature detected by the temperature sensor 33b. The higher the temperature of the screw shaft 431 is, the longer the lead of the screw shaft 431 becomes. Accordingly, the higher the temperature detected by the temperature sensor 33b is, the larger the adjustment coefficient becomes. The relation between the temperature detected by the temperature sensor 33b and the adjustment coefficient is derived by experiment, simulation, etc. and is stored in advance in the internal storage of the control device 4.

The control device 4 multiplies the rotation amount of the motor 450 derived based on the movement amount of the table T as described above by the adjustment coefficient. This adjusts the rotation amount of the screw shaft 431, and adjusts the positions of the nut 432 and the table T with high accuracy.

By periodically checking the temperature detected by the temperature sensor 33b, the user can adjust the position of the table T with high accuracy.

Based on the temperature detected by the temperature sensor 33b, the control device 4 detects an abnormality in the bearing 440 before the failure of the bearing 440 occurs in the first support 413 and the second support 423.

An abnormality in the bearing 440 occurs when the temperature of the screw shaft 431 increases and the dimensional relation between the screw shaft 431 and the bearing 440 changes. The increase in the temperature of the screw shaft 431 increases the diameter of the screw shaft 431, leading to an occurrence of an abnormality such as damage in the bearing 440. The worsened abnormality in the bearing 440 leads to an occurrence of a failure such as seizure in the bearing 440.

In view of this, the control device 4 determines that there is an abnormality in the bearing 440 when the temperature detected by the temperature detection device 33 is equal to or greater than a predetermined temperature. Therefore, by arranging the temperature detection device 33 on the screw shaft 431, it is possible to achieve earlier detection of an abnormality in the bearing 440.

The control device 4 stores the temperature detected by the temperature sensor 33b and the identification information such that the temperature and the identification information are associated with each other. Accordingly, the control device 4 can identify the bearing 440 determined to have an abnormality in the bearing 440. Based on the determination result of the control device 4, the user examines the bearing 440 determined to have an abnormality.

By periodically checking the temperature detected by the temperature sensor 33b by the control device 4, the user can detect abnormalities in the bearing 440, that is, abnormalities in the mechanical device 402, at an early stage.

As described above, according to the present embodiment, the mechanical device 402 includes: the screw shaft 431; the nut 432 in which the screw shaft 431 is fitted so as to be rotatable relative thereto (movable relative thereto); and the RFID tag 33a that includes the temperature sensor 33b configured to detect the temperature of the screw shaft 431 and transmits the temperature detected by the temperature sensor 33b to the reader/writer 3. The temperature sensor 33b is disposed on the end surface F3 of the screw shaft 431.

With this configuration, even when the mechanical device 402 includes the screw shaft 431 and the nut 432 fitted to the screw shaft 431 so as to be rotatable relative thereto, it is possible, as described above, to simplify the configuration of the mechanical device 402 and achieve earlier detection of an abnormality in the mechanical device 402 based on the temperature of the screw shaft 431.

Furthermore, when the temperature sensor 33b is disposed on the end surface F3 of the screw shaft 431, the centrifugal force acting on the temperature sensor 33b can be reduced as compared with the case where the temperature sensor 33b is disposed on the outer circumferential surface of the screw shaft 431. Accordingly, occurrence of a failure of the temperature sensor 33b can be reduced.

In the temperature management system 1b, the control device 4 controls the rotation amount of the screw shaft 431, and adjusts the rotation amount of the screw shaft 431 based on the detection result of the temperature sensor 33b.

With this configuration, the control device 4 adjusts the rotation amount of the screw shaft 431 based on the temperature detected by the temperature sensor 33b, thereby adjusting the movement amount of the nut 432. This makes it possible, in the mechanical device 402, to reduce the influence of the temperature change of the screw shaft 431.

Next, a temperature management system 1a and a mechanical device 402 according to a modification of the second embodiment of the present disclosure will be described focusing mainly on differences from the temperature management system 1a and the mechanical device 402 of the second embodiment described above.

For example, the mechanical device 402 may be a device (for example, a robot arm) including the ball screw 430 instead of the XY table.

In addition, the temperature detection device 33 may be disposed on a circumferential side surface of the screw shaft 431. The temperature detection device 33 may be disposed on the nut 432. In this case, the temperature detection device 33 detects the temperature of the screw shaft 431 via the nut 432.

### <Third embodiment>

Next, a temperature management system 1b and a mechanical device 530 according to a third embodiment of the present disclosure will be described focusing mainly on differences from the temperature management system 1 and the mechanical device 20 of the first embodiment described above.

### <Temperature management system 1b>

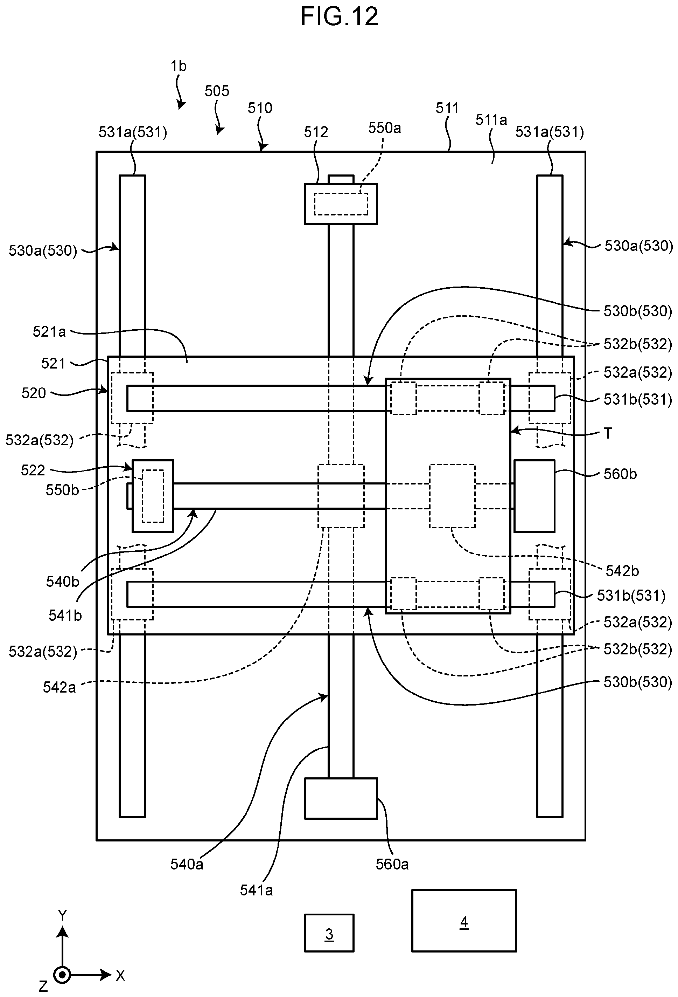

FIG. 12 is a diagram illustrating a configuration of the temperature management system 1b according to the third embodiment of the present disclosure. The temperature management system 1b is a system that monitors a machine equipment unit 505 including the mechanical device 530 to be described later. The temperature management system 1b includes the machine equipment unit 505, the reader/writer 3, and the control device 4. The reader/writer 3 and the control device 4 are the same as the reader/writer 3 and the control device 4 of the first embodiment described above. The temperature management system 1b may include a plurality of the machine equipment units 505.

The machine equipment unit 505 is an XY table that moves the workpiece along the X direction and the Y direction. The machine equipment unit 505 includes a fixing unit 510, a moving unit 520, and a table T on which a workpiece is disposed.

The fixing unit 510 includes a first base 511, two first mechanical devices 530a, and a first ball screw 540a. The two first mechanical devices 530a and the first ball screw 540a are disposed on an upper surface 511a (surface on the +Z side) of the first base 511.

The first mechanical device 530a is a linear guide that guides the moving unit 520 along the Y direction. The first mechanical device 530a includes: a first guide rail 531a extending along the Y direction; two first sliders 532a slidably attached to the first guide rail 531a; and a plurality of first rolling elements (not illustrated in FIG. 1) that roll between the first guide rail 531a and the first sliders 532a. The moving unit 520 is fixed to the first sliders 532a. Details of the first mechanical device 530a will be described later.

The first ball screw 540a includes a first screw shaft 541a and a first nut 542a.

The first screw shaft 541a extends along the Y direction. A first end of the first screw shaft 541a is supported by a first support 512. The first support 512 includes a first bearing 550a that rotatably supports the first screw shaft 541a. The first bearing 550a is, for example, a rolling bearing.

A second end of the first screw shaft 541a is fixed to the output shaft of a first motor 560a so as to be rotatable integrally therewith. The first motor 560a rotates the first screw shaft 541a.

The first nut 542a is fitted to the first screw shaft 541a so as to be rotatable relative thereto. A plurality of balls is disposed on the inner side of the first nut 542a. When the first screw shaft 541a rotates, the balls circulate in the first nut 542a. The moving unit 520 is fixed to the first nut 542a. When the first screw shaft 541a rotates, the first nut 542a, the first sliders 532a, and the moving unit 520 move along the Y direction.

The moving unit 520 includes a second base 521, two second mechanical devices 530b, and a second ball screw 540b. The first slider 532a and the first nut 542a are fixed to a back surface (surface on -Z side) of the second base 521. The two second mechanical devices 530b and the second ball screw 540b are disposed on an upper surface 521a (surface on the +Z side) of the second base 521.

The second mechanical device 530b guides the table T along the X direction. The second mechanical device 530b includes: a second guide rail 531b extending along the X direction; two second sliders 532b slidably attached to the second guide rail 531b; and a plurality of second rolling elements (not illustrated in FIG. 1) rolling between the second guide rail 531b and the second sliders 532b. The table T is fixed to the second sliders 532b. Details of the second mechanical device 530b will be described later.

The second ball screw 540b includes a second screw shaft 541b and a second nut 542b.

The second screw shaft 541b extends along the X direction. A first end of the second screw shaft 541b is supported by a second support 522. The second support 522 includes a second bearing 550b that rotatably supports the second screw shaft 541b. The second bearing 550b is a rolling bearing.

A second end of the second screw shaft 541b is fixed to the output shaft of a second motor 560b so as to be rotatable integrally therewith. The second motor 560b rotates the second screw shaft 541b.

The second nut 542b is fitted to the second screw shaft 541b so as to be rotatable relative thereto. A plurality of balls are disposed on the inner side of the second nut 542b. The rotation of the second screw shaft 541b causes the balls to circulate in the second nut 542b. The table T is fixed to the second nut 542b. The rotation of the second screw shaft 541b causes the second nut 542b, the second sliders 532b, and the table T to move along the X direction.

The first ball screw 540a and the second ball screw 540b are configured similarly to each other. The first bearing 550a and the second bearing 550b are configured similarly to each other. The first motor 560a and the second motor 560b are configured similarly to each other.

The first mechanical device 530a and the second mechanical device 530b are configured similarly to each other. That is, the first guide rail 531a and the second guide rail 531b, the first slider 532a and the second slider 532b, and the first rolling element and the second rolling element are configured similarly to each other.

Hereinafter, when the first mechanical device 530a and the second mechanical device 530b will be described with no mutual distinction, each of the components is simply denoted as the "mechanical device 530". Similarly, when the first guide rail 531a and the second guide rail 531b are described with no mutual distinction, each of the components is simply denoted as the "guide rail 531". When the first slider 532a and the second slider 532b are described with no mutual distinction, each of the components is simply denoted as the "slider 532". When the first rolling element and the second rolling element are described with no mutual distinction, each of the components is simply denoted as the "rolling element B". The slider 532 corresponds to a "first member" in the third embodiment. The "guide rail 531" corresponds to a "second member" in the third embodiment.

As described later, the mechanical device 530 includes: a temperature sensor 33b that detects the temperature of the slider 532; and an RFID tag 33a formed integrally with the temperature sensor 33b.

Similarly to the first embodiment, the reader/writer 3 wirelessly communicates with the RFID tag 33a included in the mechanical device 530.

The control device 4 acquires the temperature detected by the temperature sensor 33b from the reader/writer 3. Based on the temperature detected by the temperature sensor 33b, the control device 4 detects abnormalities in the mechanical device 530 before occurrence of the failure in the mechanical device 530.

The abnormality in the mechanical device 530 occurs when the state change (for example, change over time) of the mechanical device 530 progresses as the slider 532 repeatedly slides with respect to the guide rail 531. Disregarding the abnormality in the mechanical device 530 leads to the failure of the mechanical device 530. Therefore, the control device 4 detects an abnormality in the mechanical device 530 occurring before occurrence of the failure of the mechanical device 530.

The progress of the state change in the mechanical device 530 brings about an increase in the temperature detected by the temperature sensor 33b (details will be described later). When the temperature detected by the temperature sensor 33b is equal to or greater than a predetermined temperature, the control device 4 determines that there is an abnormality in the mechanical device 530. The user examines the mechanical device 530 determined to have an abnormality based on the determination result of the control device 4.

By periodically checking, by the control device 4, the temperature detected by the temperature sensor 33b, the user can detect abnormalities in the mechanical device 530 at an early stage.

### <Mechanical device 530>

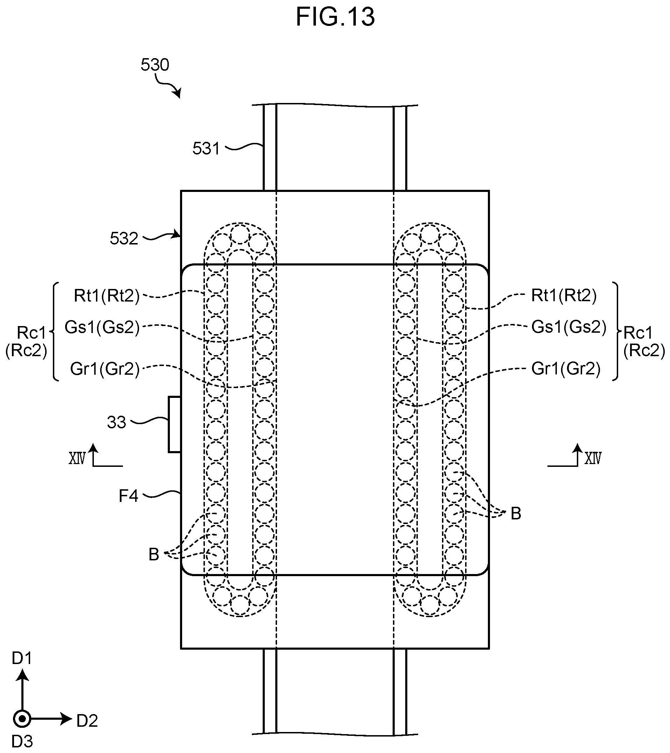

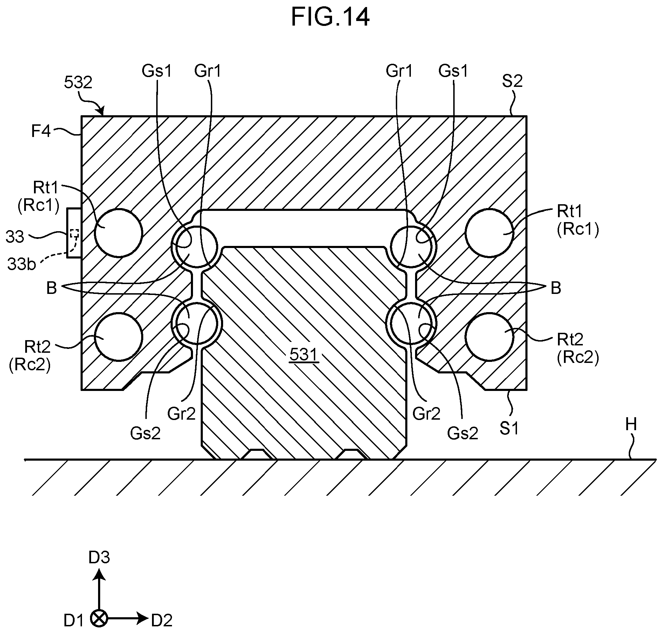

FIG. 13 is a diagram illustrating a configuration of the mechanical device 530 illustrated in FIG. 12. FIG. 14 is a cross-sectional view of the mechanical device 530 taken along line XIV-XIV illustrated in FIG. 13.

A first direction D1 illustrated in the drawing is a direction along which the guide rail 531 extends. A second direction D2 is a direction orthogonal to the first direction D1 and parallel to a placement surface H (the upper surface 511a of the first base 511 or the upper surface 521a of the second base 521) on which the guide rail 531 is disposed. A third direction D3 is a direction orthogonal to the placement surface H and is a direction orthogonal to the first direction D1 and the second direction D2.

As described above, the mechanical device 530 includes the guide rail 531, the slider 532, and the rolling elements B. The rolling element B has a spherical shape. Alternatively, the rolling element B may have a columnar shape.

The guide rail 531 has a straight line shape. The outer surface of the guide rail 531 has a pair of first rail grooves Gr1 and a pair of second rail grooves Gr2. The first rail grooves Gr1 and the second rail grooves Gr2 extend along the direction along which the guide rail 531 extends.

The slider 532 is slidably attached to the guide rail 531. The sliding direction of the slider 532 is a direction along which the guide rail 531 extends (that is, the first direction D1).

The slider 532 has a U-shaped cross section, with the placement surface H side being open. The slider 532 includes a pair of first slider grooves Gs1 facing the pair of first rail grooves Gr1 and a pair of second slider grooves Gs2 facing the pair of second rail grooves Gr2. In the slider 532, the second base 521 or the table T is fixed to an opposite surface S2 opposite to the facing surface S1 facing the placement surface H as described above.

When the slider 532 moves with respect to the guide rail 531, the rolling elements B roll in the direction opposite to the sliding direction between the first rail groove Gr1 and the first slider groove Gs1 and between the second rail groove Gr2 and the second slider groove Gs2.

The slider 532 further includes a pair of first rolling paths Rt1 and a pair of second rolling paths Rt2. The first rolling path Rt1 is a path connecting both ends of the first slider groove Gs1 and along which the rolling elements B can roll. When the slider 532 moves with respect to the guide rail 531, the first rolling path Rt1 and a portion between the first rail groove Gr1 and the first slider groove Gs1 constitute a first circulation path Rc1 along which the rolling elements B circulate.

The second rolling path Rt2 is a path connecting both ends of the second slider groove Gs2 and along which the rolling elements B can roll. When the slider 532 moves with respect to the guide rail 531, the second rolling path Rt2 and a portion between the second rail groove Gr2 and the second slider groove Gs2 constitute a second circulation path Rc2 along which the rolling elements B circulate.

The first circulation path Rc1 and the second circulation path Rc2 are positioned apart from each other in the third direction D3. Hereinafter, when the first circulation path Rc1 and the second circulation path Rc2 will be described with no mutual distinction, each of the paths is simply denoted as the "circulation path Rc". When the rolling elements B circulate through the circulation path Rc, frictional force is generated between the circulation path Rc and the rolling elements B.

The mechanical device 530 further includes a temperature detection device 33. The temperature detection device 33 detects the temperature of the slider 532. The temperature detection device 33 is disposed on an outer surface F4 of the slider 532.

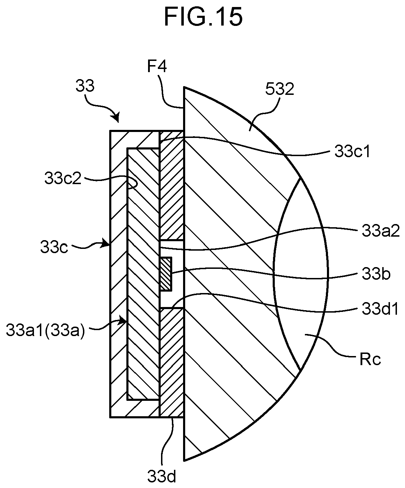

FIG. 15 is a diagram illustrating a cross section of the temperature detection device 33 illustrated in FIG. 14. FIG. 15 illustrates a state where the temperature detection device 33 is disposed on the slider 532. The temperature detection device 33 is the same as the temperature detection device 33 of the first embodiment described above.

The temperature sensor 33b detects the temperature of the slider 532. That is, the temperature detected by the temperature sensor 33b corresponds to the temperature detected by the temperature detection device 33.

The temperature sensor 33b is disposed on the principal surface 33a2 of the substrate 33a1. In a state where the temperature detection device 33 is disposed on the slider 532, the temperature sensor 33b faces the outer surface F4 of the slider 532. There is a space between the temperature sensor 33b and the outer surface F4 of the slider 532. This configuration inhibits the transmission of vibration of the slider 532 to the temperature sensor 33b, reducing occurrence of the failure of the temperature sensor 33b.

When the slider 532 is viewed along a direction orthogonal to the sliding direction of slider 532, the temperature sensor 33b overlaps with the circulation path Rc. In the third embodiment, when the slider 532 is viewed along the second direction D2, the temperature sensor 33b overlaps with the circulation path Rc.

The temperature sensor 33b illustrated in FIG. 14 is in a state of overlapping with the first circulation path Rc1 when the slider 532 is viewed along the second direction D2. The temperature sensor 33b may overlap with the second circulation path Rc2 when the slider 532 is viewed along the second direction D2. The temperature sensor 33b may be disposed in a state of overlapping with the circulation path Rc when the slider 532 is viewed along the first direction D1.

Next, operation of the mechanical device 530 when an abnormality occurs in the mechanical device 530 will be described.

As described above, when the rolling elements B circulate through the circulation path Rc, frictional force is generated between the circulation path Rc and the rolling elements B. The progress of the state change of the mechanical device 530 due to the frictional force brings about an occurrence of an abnormality such as damage in the rolling elements B, the guide rails 531, and the sliders 532 in some cases. The worsened abnormality leads to the possibility of an occurrence of a failure such as seizure.

The progress of the state change of the mechanical device 530 due to the frictional force brings about an increase in the temperatures of the rolling elements B, the guide rails 531, and the sliders 532. When the slider 532 slides, the rolling elements B constantly roll in the first slider groove Gs1, the second slider groove Gs2, the first rolling path Rt1, and the second rolling path Rt2 constituting the circulation path Rc in the slider 532. Consequently, the temperatures of the rolling elements B and the temperature of the slider 532 increase earlier than the temperature of the guide rail 531.

In the slider 532, a portion in the vicinity of the circulation path Rc is closer to the rolling elements B than other portions. Thus, in the slider 532, the temperature of the portion in the vicinity of the circulation path Rc increases earlier than the temperatures of the other portions.

Furthermore, as illustrated in FIG. 13, in the slider 532, the rolling distances of the rolling elements B at portions on both sides in the second direction D2 are longer than those at portions on both sides in the first direction D1. Thus, the temperature of the portions on both sides in the second direction D2 increases earlier than the temperature of the portions on both sides in the first direction D1.

As described above, the temperature sensor 33b is positioned at a portion overlapping with the circulation path Rc when the slider 532 is viewed along the second direction D2. That is, when the slider 532 is viewed along the second direction D2, the temperature sensor 33b overlaps with a portion where the temperature increases early in the slider 532. Thus, the temperature detected by the temperature sensor 33b increases earlier than in a case where the temperature sensor 33b is at other positions.

As described above, the temperature detected by the temperature detection device 33 is stored in the control device 4 via the reader/writer 3. Furthermore, when the temperature detected by the temperature detection device 33 is equal to or greater than a predetermined temperature, the control device 4 determines that there is an abnormality in the mechanical device 530. This makes it possible for the temperature management system 1b to achieve earlier detection of an abnormality in the mechanical device 530.

As described above, according to the present embodiment, the mechanical device 530 includes: the guide rail 531; the slider 532 slidably attached to the guide rail 531; and the RFID tag 33a that includes the temperature sensor 33b configured to detect the temperature of the slider 532 and transmits the temperature detected by the temperature sensor 33b to the reader/writer 3. The mechanical device 530 further includes the rolling elements B that roll between the guide rail 531 and the slider 532. The slider 532 has the circulation path Rc along which the rolling elements B circulate. When the slider 532 is viewed along a direction orthogonal to the sliding direction of slider 532, the temperature sensor 33b overlaps with the circulation path Rc.

According to this, even when the mechanical device 530 includes the guide rail 531 and the slider 532 slidably (movably) attached to the guide rail 531, it is possible, as described above, to simplify the configuration of the mechanical device 530 and achieve earlier detection of an abnormality in the mechanical device 530 based on the temperature of the slider 532.

Furthermore, in the slider 532, the temperature of a portion in contact with the rolling elements B increases earlier than the temperatures of other portions. Accordingly, the portion where the temperature sensor 33b is disposed on the outer surface of the slider 532 increases early in response to the temperature increase in the slider 532. This makes it possible for the mechanical device 530 to contribute to the achievement, with reliability, of earlier detection of an abnormality by the temperature detected by the temperature sensor 33b.

Next, a temperature management system 1b and a mechanical device 530 according to a modification of the embodiment of the present disclosure will be described focusing mainly on differences from the temperature management system 1b and the mechanical device 530 of the third embodiment described above.

For example, the machine equipment unit 505 may be an equipment unit (for example, a machine tool) including the mechanical device 530, instead of the XY table.

The number of sliders 532 attached to one guide rail 531 is not limited to two, and may be one, or three or more.

When a component such as the table T is not fixed to the opposite surface S2 of the slider 532, the temperature detection device 33 may be disposed on the opposite surface S2. In this case, the temperature sensor 33b may be disposed in a state of overlapping with the circulation path Rc when the slider 532 is viewed along the third direction D3. Alternatively, when slider 532 is viewed along a direction orthogonal to the sliding direction of slider 532, temperature sensor 33b may be disposed in a state of not overlapping with the circulation path Rc.

### <Fourth embodiment>

Next, a temperature management system 1c and a mechanical device 610 according to a fourth embodiment of the present disclosure will be described focusing mainly on differences from the temperature management system 1 of the first embodiment described above.

### <Temperature management system 1c and Mechanical device 610>

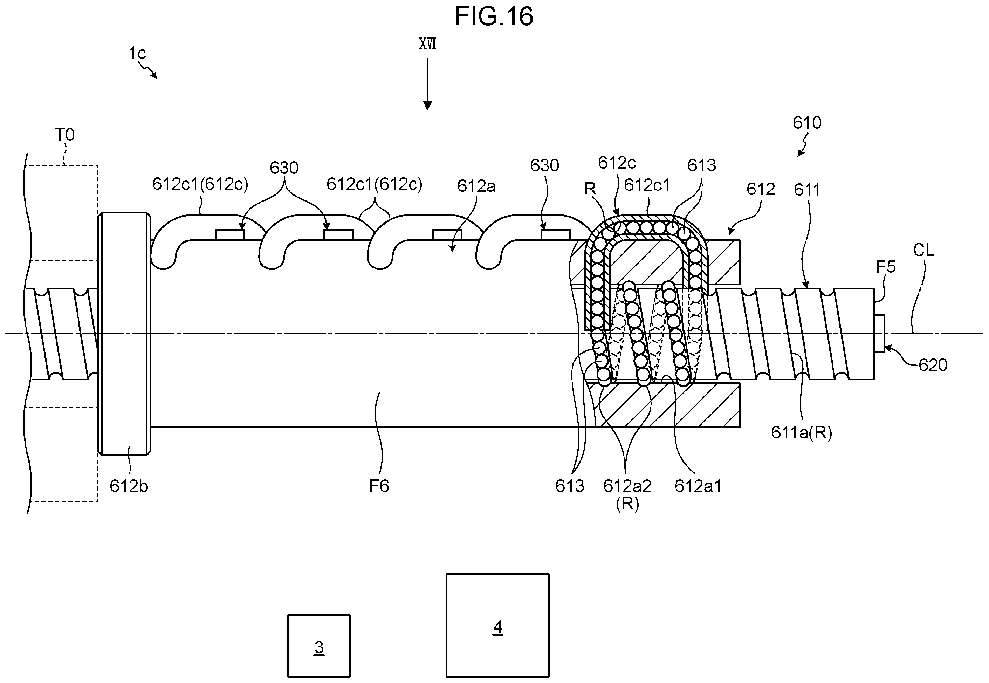

FIG. 16 is a diagram illustrating a configuration of the temperature management system 1c according to the fourth embodiment of the present disclosure. The temperature management system 1c includes a mechanical device 610, a first temperature detection device 620, a second temperature detection device 630, the reader/writer 3, and the control device 4. The reader/writer 3 and the control device 4 are the same as the reader/writer 3 and the control device 4 of the first embodiment described above.

The mechanical device 610 is a ball screw used for moving a target object T0. The target object T0 is, for example, a mold of an injection molding machine, a main shaft head of a machine tool, a table of an XY table, or the like. The mechanical device 610 includes: a screw shaft 611 (corresponding to a "first member" in the fourth embodiment); a nut 612 (corresponding to a "second member" in the fourth embodiment); and a plurality of balls 613.

The screw shaft 611 has a columnar shape extending along a central axis CL. The screw shaft 611 has a spiral first groove 611a in the outer circumferential surface. The screw shaft 611 is connected to an output shaft of a motor, for example, and rotates by driving of the motor.

The nut 612 is fitted to the screw shaft 611 so as to be rotatable relative thereto. The circulation system of the balls 613 in the nut 612 is a tube system. The nut 612 includes a main body 612a, an attachment member 612b, and a plurality of circulation members 612c.

The main body 612a has a cylindrical shape and has a through-hole 612a1 through which the screw shaft 611 passes. The inner circumferential surface of the through-hole 612a1 has a second groove 612a2 having a spiral shape and facing the first groove 611a of the screw shaft 611. The first groove 611a and the second groove 612a2 constitute a path R of the balls 613.

The attachment member 612b is disposed on one end surface of the main body 612a. The screw shaft 611 penetrates the attachment member 612b. The target object T0 is attached to the attachment member 612b. The attachment member 612b may be disposed on a side surface of the main body 612a.

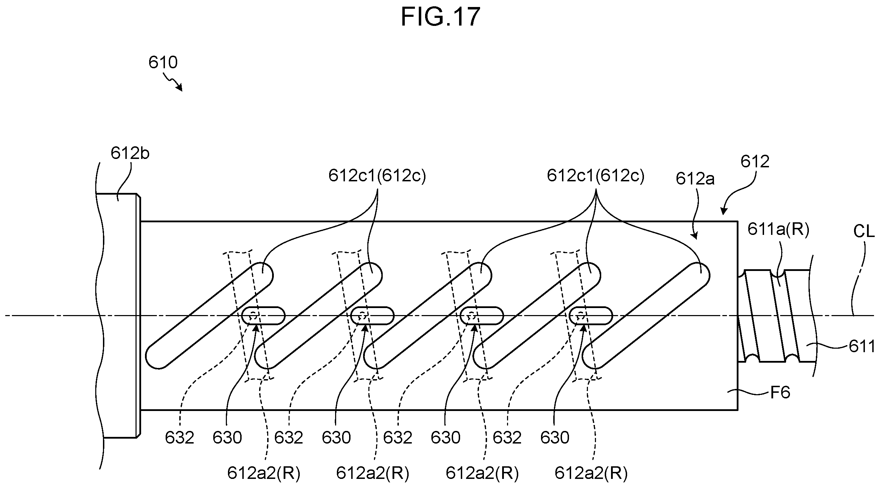

FIG. 17 is a side view of the mechanical device 610 as viewed along the arrow XVII illustrated in FIG. 16. The arrow XVII illustrated in FIG. 16 extends along the radial direction of the screw shaft 611.

As illustrated in FIGS. 16 and 17, the circulation member 612c has a tubular shape. The inner side of the circulation member 612c constitutes the path R of the balls 613. Each end of the circulation member 612c opens to a different portion of the second groove 612a2 in the direction along which the central axis CL extends. The relative rotation of the screw shaft 611 and the nut 612 causes the balls 613 to circulate between the first groove 611a and the second groove 612a2 constituting the path R and inside the circulation member 612c. Grease that facilitates circulation of the balls 613 is applied to the path R.

The nut 612 includes a plurality of the circulation members 612c. The number of the circulation members 612c is five, but the number is not limited to five.

The circulation member 612c has a protrusion 612c1 protruding from the main body 612a. The protrusion 612c1 of the circulation member 612c is inclined with respect to the central axis CL of the screw shaft 611 when the mechanical device 610 is viewed along the radial direction of the screw shaft 611. The protrusions 612c1 of the circulation members 612c are arranged along the central axis CL of the screw shaft 611.

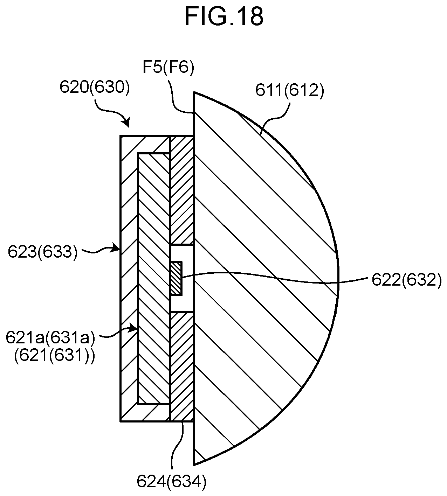

FIG. 18 is a diagram illustrating a cross section of the first temperature detection device 620 illustrated in FIG. 16. FIG. 18 illustrates a state where the first temperature detection device 620 is disposed on the screw shaft 611.

The first temperature detection device 620 is configured similarly to the temperature detection device 33 of the first embodiment. The first temperature detection device 620 includes: a first RFID tag 621 (corresponding to an "RFID tag" in the fourth embodiment) including a substrate 621a; a first temperature sensor 622 (corresponding to a "temperature sensor" in the fourth embodiment); a first cover member 623; and a first adhesive member 624. The substrate 621a, the first RFID tag 621, the first temperature sensor 622, the first cover member 623, and the first adhesive member 624 are configured similarly to the substrate 33a1, the RFID tag 33a, the temperature sensor 33b, the cover member 33c, and the adhesive member 33d in the temperature detection device 33 of the first embodiment described above. The first RFID tag 621 is configured integrally with the first temperature sensor 622.

As illustrated in FIGS. 16 and 18, the first temperature detection device 620 is disposed on an end surface F5 of the screw shaft 611. That is, the first RFID tag 621 is disposed on the end surface F5 of the screw shaft 611. The first RFID tag 621 wirelessly communicates with the reader/writer 3. The first temperature sensor 622 detects the temperature of the screw shaft 611.

Similarly to the RFID tag 33a of the first embodiment, the first RFID tag 621 transmits, to the reader/writer 3, identification information (for example, an identification number) identifying the mechanical device 610 and identification information identifying the first RFID tag 621, in association with the temperature detected by the first temperature sensor 622. The identification information is stored in advance in the first RFID tag 621 by the reader/writer 3.

In a state where the first temperature detection device 620 is bonded to the end surface F5 of the screw shaft 611, the first temperature sensor 622 faces the end surface F5 of the screw shaft 611. There is a space between the first temperature sensor 622 and the end surface F5 of the screw shaft 611. This configuration inhibits the transmission of vibration of the screw shaft 611 to the first temperature sensor 622, reducing occurrence of the failure of the first temperature sensor 622.

The second temperature detection device 630 is configured similarly to the first temperature detection device 620. The second temperature detection device 630 includes: a second RFID tag 631 corresponding to the first RFID tag 621 (corresponding to the "second RFID tag": including the substrate 631a); a second temperature sensor 632 corresponding to the first temperature sensor 622 (corresponding to the "second temperature sensor"); a second cover member 633 corresponding to the first cover member 623; and a second adhesive member 634 corresponding to the first adhesive member 624. The substrate 631a corresponds to the substrate 621a.

As illustrated in FIGS. 16,17, and 18, the second temperature detection device 630 is disposed on an outer surface F6 of the main body 612a of the nut 612. The second adhesive member 634 bonds the second RFID tag 631 and the second cover member 633 to the outer surface F6 of the main body 612a of the nut 612. The second temperature sensor 632 faces the outer surface F6 of the main body 612a. The second temperature sensor 632 detects the temperature of the nut 612. There is a space between the second temperature sensor 632 and the outer surface F6 of the main body 612a. This configuration inhibits the transmission of vibration of the nut 612 to the second temperature sensor 632, reducing occurrence of the failure of the second temperature sensor 632.

The temperature management system 1c includes a plurality of the second temperature detection devices 630. The number of the second temperature detection devices 630 is four, but the number is not limited to four. As illustrated in FIG. 17, the second temperature detection devices 630 are arranged in a line along the central axis CL. Each of the second temperature detection devices 630 is disposed at a portion between two adjacent protrusions 612c1 out of the protrusions 612c1 in the main body 612a. That is, the second RFID tags 631 are arranged in a line along the central axis CL. Each of the second RFID tags 631 is disposed at a portion between two adjacent protrusions 612c1 in the main body 612a. The position of the second temperature detection device 630 is not limited to the positions illustrated in FIGS. 16 and 17.

Furthermore, each of the second temperature sensors 632 of the second temperature detection devices 630 overlaps with the path R of the ball 613 of the nut 612 when viewed along the radial direction of the screw shaft 611. Specifically, the second temperature sensor 632 overlaps with the second groove 612a2 when viewed along the radial direction of the screw shaft 611.

The reader/writer 3 illustrated in FIG. 16 wirelessly communicates with the first RFID tag 621 and the second RFID tag 631 similarly to the first embodiment. The reader/writer 3 can communicate with the first RFID tag 621 and the second RFID tag 631 even when the screw shaft 611 rotates.

Similarly to the first RFID tag 621, the second RFID tag 631 transmits, to the reader/writer 3, identification information (for example, an identification number) identifying the mechanical device 610 and identification information identifying the second RFID tag 631 in association with the temperature detected by the second temperature sensor 632. The identification information is stored in advance in the second RFID tag 631 by the reader/writer 3.

The user operates the reader/writer 3 to transmit a carrier wave from the reader/writer 3 toward the first RFID tag 621 and the second RFID tag 631. In response to this, the first RFID tag 621 transmits each piece of identification information and the temperature detected by the first temperature sensor 622 to the reader/writer 3. The second RFID tag 631 transmits the identification information and the temperature detected by the second temperature sensor 632 to the reader/writer 3.

The reader/writer 3 acquires each piece of identification information, the temperature detected by the first temperature sensor 622, and the temperature detected by the second temperature sensor 632, and transmits the acquired information to the control device 4.

The control device 4 controls the rotation amount of the motor to control the rotation amount of the screw shaft 611 and the movement amount of the nut 612. When the nut 612 rotates with respect to the screw shaft 611, the ball 613 circulates between the screw shaft 611 and the nut 612. The friction between the screw shaft 611 and the ball 613 and friction between the nut 612 and the ball 613 increase the temperature of the screw shaft 611 and the temperature of the nut 612. The nut 612 reciprocates with respect to the screw shaft 611. This makes the temperature of the screw shaft 611 substantially the same temperature throughout the screw shaft 611.

The control device 4 acquires, from the reader/writer 3, the identification information, the temperature detected by the first temperature sensor 622, and the temperatures detected by the second temperature sensors 632. The control device 4 stores the temperature detected by the first temperature sensor 622 and the temperature detected by the second temperature sensor 632 in the internal storage in chronological order such that the temperatures are associated with the corresponding identification information. In addition, the control device 4 displays the temperature detected by the first temperature sensor 622 and the temperature detected by the second temperature sensor 632 on a display unit (for example, a display) such that the temperatures are associated with the corresponding identification information.

In addition, the control device 4 calculates a temperature difference between each of the temperatures detected by the second temperature sensors 632 and the temperature detected by the first temperature sensor 622. For example, when the grease in the path R has decreased to be a relatively small amount, the friction between the nut 612 and the ball 613 becomes large, thereby increasing the temperature of the nut 612 to be higher than the temperature of the screw shaft 611.

The increase in the difference between the temperature of the screw shaft 611 and the temperature of the nut 612 increases the difference between the thermal expansion amount of the screw shaft 611 and the thermal expansion amount of the nut 612, thereby narrowing the path R of the ball 613 between the screw shaft 611 and the nut 612. This increases the friction between the screw shaft 611 and the ball 613 and friction between the nut 612 and the ball 613, which might cause a damage to the mechanical device 610. The damage to the mechanical device 610 affects the life of the mechanical device 610.

In view of this, in a case where the temperature difference between the temperature detected by the second temperature sensor 632 and the temperature detected by the first temperature sensor 622 is equal to or greater than a predetermined temperature difference, the control device 4 detects abnormalities in the mechanical device 610. The control device 4 detects abnormalities in the mechanical device 610 when the temperature difference between the temperature detected by the first temperature sensor 622 and the temperature detected by at least one second temperature sensor 632 among the temperatures detected by the second temperature sensors 632 is equal to or greater than a predetermined temperature difference. The predetermined temperature difference is determined to be, for example, a temperature difference at which the mechanical device 610 is not damaged, and is stored in advance in the internal storage of the control device 4.

When having detected an abnormality in the mechanical device 610, the control device 4 displays, on a display unit (for example, a display), that the abnormality in the mechanical device 610 has been detected. At this time, the control device 4 displays, on the display unit, identification information of the second temperature sensor 632 corresponding to a temperature difference that is equal to or greater than a predetermined temperature difference, wherein the temperature difference is a difference between a temperature detected by the first temperature sensor 622 and a temperature detected by the second temperature sensor 632 among the temperatures detected by the multiple second temperature sensors 632. The user performs maintenance of the mechanical device 610 based on the display content. For example, when the abnormality in the mechanical device 610 is due to grease shortage as described above, the grease will be applied. By periodically checking the temperature detected by the first temperature sensor 622 and the temperature detected by the second temperature sensor 632 using the reader/writer 3, the user can achieve earlier detection of abnormalities in the mechanical device 610.

When the target object T0 attached to the nut 612 has a heat source, the control device 4 detects abnormalities in the mechanical device 610 also in a case where the temperature difference between the temperature detected by the second temperature sensor 632 and the temperature detected by the first temperature sensor 622 becomes equal to or greater than a predetermined temperature difference due to the heat of the heat source being transferred to the nut 612.

As described above, according to the present embodiment, the mechanical device 610 includes: the screw shaft 611; the nut 612 fitted to the screw shaft 611 so as to be rotatable relative thereto (movable relative thereto); and the first RFID tag 621 that includes the first temperature sensor 622 configured to detect the temperature of the screw shaft 611 and transmits the temperature detected by the first temperature sensor 622 to the reader/writer 3. The mechanical device 610 further includes the second RFID tag 631 that includes the second temperature sensor 632 configured to detect the temperature of the nut 612 and transmits the temperature detected by the second temperature sensor 632 to the reader/writer 3.

With this configuration, even when the mechanical device 610 includes the screw shaft 611 and the nut 612 fitted to the screw shaft 611 so as to be rotatable relative thereto, it is possible, as described above, to simplify the configuration of the mechanical device 610 and achieve earlier detection of an abnormality in the mechanical device 610 based on the temperature of the screw shaft 611 and the temperature of the nut 612.

The control device 4 detects an abnormality in the mechanical device 610 in a case where the temperature difference between the temperature detected by the first temperature sensor 622 and the temperature detected by the second temperature sensor 632 is equal to or greater than a predetermined temperature difference.

With this configuration, the control device 4 wirelessly acquires the temperature of the screw shaft 611 and the temperature of the nut 612 via the first RFID tag 621, the second RFID tag 631, and the reader/writer 3. Accordingly, the control device 4 can easily acquire the temperature of the screw shaft 611 and the temperature of the nut 612 even when the screw shaft 611 rotates. Thus, the control device 4 can easily manage the temperature of the screw shaft 611 and the temperature of the nut 612.

When the temperature of the nut 612 increases due to friction between the nut 612 and the ball 613, for example, the temperature difference between the temperature of the nut 612 and the temperature of the screw shaft 611 becomes relatively large. When this increases the difference between the thermal expansion amount of the nut 612 and the thermal expansion amount of the screw shaft 611, the friction between the screw shaft 611 and the ball 613 and the friction between the nut 612 and the ball 613 become relatively large, which may shorten the life of the mechanical device 610. In view of this, when the temperature difference between the temperature of the screw shaft 611 and the temperature of the nut 612 is equal to or greater than a predetermined temperature difference, the control device 4 detects an abnormality in the mechanical device 610. This makes it possible for the temperature management system 1c to suppress shortening of the life of the mechanical device 610.

The first RFID tag 621 is disposed on the end surface F5 of the screw shaft 611.

With this configuration, the centrifugal force acting on the first RFID tag 621 can be reduced as compared with the case where the first RFID tag 621 is disposed on the outer circumferential surface of the screw shaft 611. Accordingly, occurrence of a failure of the first RFID tag 621 can be reduced.

The nut 612 includes; the main body 612a having the through-hole 612a1 through which the screw shaft 611 passes; and a plurality of circulation members 612c constituting the path of the ball 613. Each of the circulation members 612c has the protrusion 612c1 protruding from the main body 612a. The second RFID tag 631 is disposed at a portion between two protrusions 612c1 of the plurality of protrusions 612c1 in the main body 612a.

When the friction between the circulation member 612c and the ball 613 becomes relatively large, the temperature of the circulation member 612c increases relatively early. Thus the second temperature sensor 632 of the second RFID tag 631 detects the temperature increase in the circulation member 612c at an early stage. This leads to an early increase of the temperature difference between the detection result of the first temperature sensor 622 and the detection result of the second temperature sensor 632. This makes it possible for the temperature management system 1c to achieve earlier detection of an abnormality in the mechanical device 610.

The second temperature sensor 632 overlaps with the path R of the ball 613 of the nut 612 when viewed along the radial direction of the screw shaft 611.

With this configuration, when the temperature of the nut 612 increases due to friction between the ball 613 and the nut 612, the temperature of the nut 612 increases relatively early in the vicinity of the path R of the ball 613. Thus the second temperature sensor 632 detects the temperature increase in the nut 612 in the vicinity of the path R of the ball 613 at an early stage. This leads to an early increase of the temperature difference between the temperature detected by the first temperature sensor 622 and the temperature detected by the second temperature sensor 632. This makes it possible for the temperature management system 1c to achieve earlier detection of an abnormality in the mechanical device 610.

The temperature management system 1c includes the second RFID tags 631. The second RFID tags 631 are arranged in a line along the central axis CL of the screw shaft 611.

With this configuration, by moving the reader/writer 3 along the central axis CL of the screw shaft 611, the user can easily acquire the temperatures detected by the second temperature sensors 632. This enables easy management of the temperature of the nut 612.

The temperature management system 1c includes the second RFID tags 631. The control device 4 detects abnormalities in the mechanical device 610 when the temperature difference between the temperature detected by the second temperature sensor 632 of at least one second RFID tag 631 among the second RFID tags 631 and the temperature detected by the first temperature sensor 622 is equal to or greater than a predetermined temperature difference.

With this configuration, even when there is an abnormality in a part of the mechanical device 610, the abnormality in the mechanical device 610 can be detected at an early stage.

Next, a temperature management system 1c and a mechanical device 610 according to a modification of the fourth embodiment of the present disclosure will be described focusing mainly on differences from the temperature management system 1c of the fourth embodiment described above.

For example, the control device 4 may detect the abnormality in the mechanical device 610 when the temperature difference between the average value of the temperatures detected by the second temperature sensors 632 and the temperature detected by the first temperature sensor 622 is equal to or greater than a predetermined temperature difference.

The first temperature detection device 620 may be disposed on the circumferential side surface of the screw shaft 611.

The number of second temperature detection devices 630 may be one.

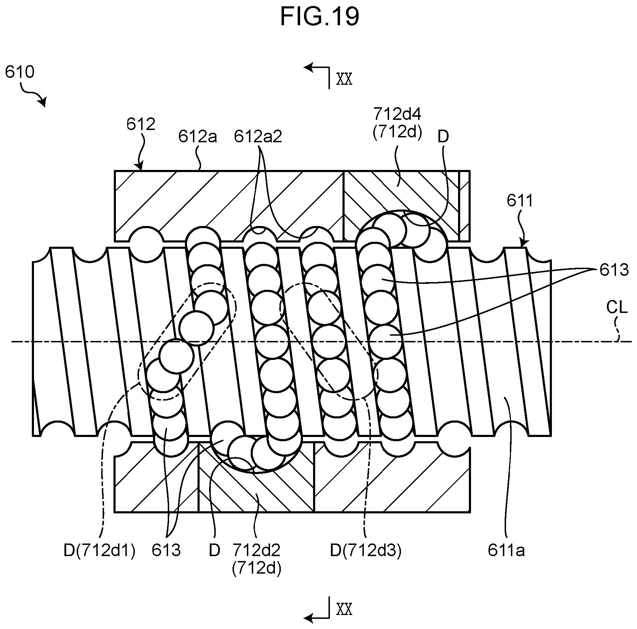

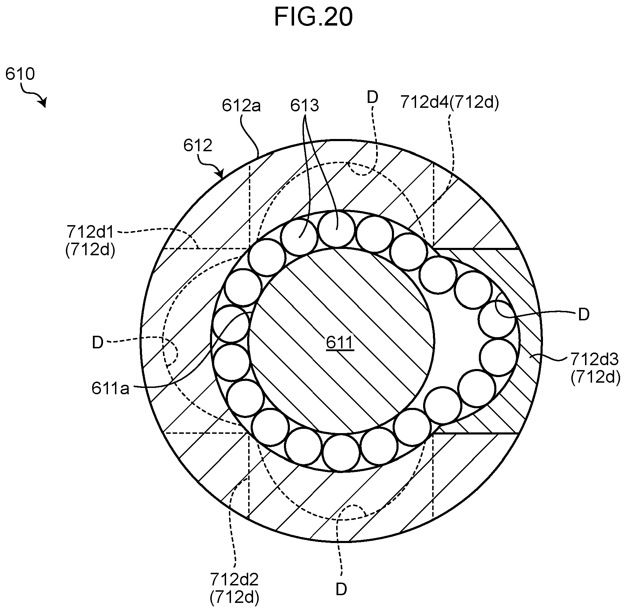

FIG. 19 is a partial cross-sectional view along the central axis CL of the mechanical device 610 included in the temperature management system 1c according to the modification of the fourth embodiment of the present disclosure. FIG. 20 is a cross-sectional view of the mechanical device 610 taken along line XX-XX illustrated in FIG. 19.

In the present modification, the nut 612 does not include the circulation member 612c. The circulation system of the balls 613 in the nut 612 of the present modification is a ball return piece system. FIGS. 19 and 20 illustrate a first piece 712d1, a second piece 712d2, a third piece 712d3, and a fourth piece 712d4. When the first piece 712d1, the second piece 712d2, the third piece 712d3, and the fourth piece 712d4 are described with no mutual distinction, each of the pieces is simply denoted as the "piece 712d".

The first piece 712d1, the second piece 712d2, the third piece 712d3, and the fourth piece 712d4 are arranged in this order along the central axis CL. The first piece 712d1, the second piece 712d2, the third piece 712d3, and the fourth piece 712d4 are positioned at equal intervals around the central axis CL.

The piece 712d faces the screw shaft 611 and has a piece groove D that enables the ball 613 to roll on the screw thread of the screw shaft 611. The piece grooves D of the first piece 712d1, the second piece 712d2, the third piece 712d3, and the fourth piece 712d4 are positioned at equal intervals in the circumferential direction of the screw shaft 611.

The ball 613 passing between the first groove 611a and the second groove 612a2 moves to the first groove 611a adjacent to the first groove 611a in the direction along the central axis CL via the piece groove D, allowing the ball 613 to circulate in the nut 612.

In the present modification, the second temperature detection device 630 may be disposed at a position where the second temperature sensor 632 overlaps with the piece groove D when viewed along the radial direction of the screw shaft 611. In this case, when a plurality of the second temperature detection devices 630 are disposed in the nut 612, the second temperature detection devices 630 may be disposed at mutually different positions in the circumferential direction of the nut 612 as viewed along the central axis CL.

The circulation system of the balls 613 in the nut 612 may be either an end deflector system or an end cap system.

### Reference Signs List

- 1: TEMPERATURE MANAGEMENT SYSTEM
- 3: READER/WRITER
- 4: CONTROL DEVICE
- 20: MECHANICAL DEVICE
- 31: SHAFT MEMBER (FIRST MEMBER)
- 33a: RFID TAG
- 33b: TEMPERATURE SENSOR
- 42: BEARING (SECOND MEMBER)
- 402: MECHANICAL DEVICE
- 431: SCREW SHAFT (FIRST MEMBER)
- 432: NUT (SECOND MEMBER)
- 530: MECHANICAL DEVICE
- 531: GUIDE RAIL (SECOND MEMBER)
- 532: SLIDER (FIRST MEMBER)
- 610: MECHANICAL DEVICE
- 611: SCREW SHAFT (FIRST MEMBER)
- 612: NUT (SECOND MEMBER)
- 612a: MAIN BODY
- 612a1: THROUGH-HOLE
- 612b: ATTACHMENT MEMBER
- 612c: CIRCULATION MEMBER
- 612c1: PROTRUSION
- 613: BALL
- 621: FIRST RFID TAG (RFID TAG)
- 622: FIRST TEMPERATURE SENSOR (TEMPERATURE SENSOR)
- 631: SECOND RFID TAG (SECOND RFID TAG)
- 632: SECOND TEMPERATURE SENSOR (SECOND TEMPERATURE SENSOR)
- B: ROLLING ELEMENT
- CL: CENTRAL AXIS
- F1, F3, F5: END SURFACE
- R: path
- Rc: CIRCULATION PATH

## Claims

1. A mechanical device comprising:
a first member;
a second member to which the first member is attached so as to be movable relative thereto; and
an RFID tag that includes a temperature sensor configured to detect a temperature of the first member and is configured to transmit the temperature detected by the temperature sensor to a reader/writer.

2. The mechanical device according to claim 1,
wherein the first member is a shaft member,
the second member is a bearing that rotatably supports the first member, and
the temperature sensor is disposed on an end surface of the first member.

3. The mechanical device according to claim 1,
wherein the first member is a screw shaft,
the second member is a nut fitted to the first member so as to be rotatable relative thereto, and
the temperature sensor is disposed on an end surface of the first member.

4. The mechanical device according to claim 1, further comprising
a plurality of rolling elements that roll between the first member and the second member,
wherein the second member is a guide rail,
the first member is a slider slidably attached to the second member, and includes a circulation path along which the rolling elements circulate, and
the temperature sensor overlaps with the circulation path when the first member is viewed along a direction orthogonal to a sliding direction of the first member.

5. The mechanical device according to claim 1,
wherein the first member is a screw shaft,
the second member is a nut fitted to the first member so as to be rotatable relative thereto, and
the mechanical device further comprises a second RFID tag that includes a second temperature sensor configured to detect a temperature of the second member and that is configured to transmit the temperature detected by the second temperature sensor to the reader/writer.

6. A temperature management system comprising:
the mechanical device according to claim 1;
the reader/writer; and
a control device that is electrically connected to the reader/writer and is configured to store the temperature detected by the temperature sensor.

7. The temperature management system according to claim 6, comprising
a plurality of the mechanical devices.

8. The temperature management system according to claim 6,
wherein the first member is a screw shaft,
the second member is a nut fitted to the first member so as to be rotatable relative thereto, and
the control device is configured to
control a rotation amount of the first member, and
adjust the rotation amount of the first member based on a result of the detection performed by the temperature sensor.

9. The temperature management system according to claim 6,
wherein the first member is a screw shaft,
the second member is a nut fitted to the first member so as to be rotatable relative thereto,
the mechanical device further includes:
a plurality of balls that circulate in the second member; and
a second RFID tag that includes a second temperature sensor configured to detect a temperature of the second member and that is configured to transmit the temperature detected by the second temperature sensor to the reader/writer, and
the control device detects an abnormality in the mechanical device when a temperature difference between the temperature detected by the temperature sensor and the second temperature sensor is equal to or greater than a predetermined temperature difference.

10. The temperature management system according to claim 9,
wherein the RFID tag is disposed on an end surface of the first member.

11. The temperature management system according to claim 9,
wherein the second member includes: a main body having a through-hole through which the first member passes; and a plurality of circulation members constituting a path for the balls,
each of the circulation members has a protrusion protruding from the main body, and
the second RFID tag is disposed at a portion between two of the protrusions in the main body.

12. The temperature management system according to claim 9,
wherein the second temperature sensor overlaps a path for the balls included in the second member when viewed along a radial direction of the first member.

13. The temperature management system according to claim 9, comprising
a plurality of the second RFID tags,
wherein the second RFID tags are arranged in a line along a central axis of the first member.

14. The temperature management system according to claim 9, comprising
a plurality of the second RFID tags,
wherein the control device detects an abnormality in the mechanical device when a temperature difference between the detection result of the temperature sensor and a detection result of the second temperature sensor of at least one of the second RFID tags is equal to or greater than a predetermined temperature difference.
